# EUROPÄISCHE PATENTSCHRIFT

(11) **EP 3 010 645 B1**
(45) Veröffentlichungstag und Bekanntmachung des Hinweises auf die Patenterteilung: **07.08.2019**
(21) Anmeldenummer: 14726961.7
(22) Anmeldetag: 26.05.2014
(51) Int. Cl.: B05B 7/14

(54) **PULVERFÖRDERVORRICHTUNG FÜR BESCHICHTUNGSPULVER**
POWDER CONVEYOR FOR COATING POWDER
DISPOSITIF POUR TRANSPORTER DE LA POUDRE DE REVETEMENT

(30) Priorität: 19.06.2013 DE 102013211550
(43) Veröffentlichungstag der Anmeldung: 27.04.2016
(73) Patentinhaber: Gema Switzerland GmbH, 9015 St. Gallen (CH)
(72) Erfinder: MAUCHLE, Felix, CH-9030 Abtwil (CH); VIELI, Hanspeter, CH-9403 Goldach (CH)
(74) Vertreter: Trinks, Ole
(86) Internationale Anmeldenummer: PCT/EP2014/060854
(87) Internationale Veröffentlichungsnummer: WO 2014/202342

(56) Entgegenhaltungen:
- EP-A1- 1 952 892
- EP-B1- 2 190 588
- DE-A1-102007 046 806
- DE-A1-102007 049 169

## Beschreibung

Die vorliegende Erfindung betrifft eine Pulverfördervorrichtung, insbesondere für Beschichtungspulver, wobei die Pulverfördervorrichtung eine Pulverdichtstrompumpe und eine Steuereinrichtung zum wahlweisen Betreiben der Pulverdichtstrompumpe in einem Pulverförder-Betriebsmodus oder einem Spül-Betriebsmodus aufweist.

Die erfindungsgemäße Pulverfördervorrichtung eignet sich insbesondere zum Fördern von Beschichtungspulver von einem ersten Pulverreservoir zu einem stromabwärts der Pulverfördervorrichtung angeordneten zweiten Pulverreservoir oder einer stromabwärts der Pulverfördervorrichtung angeordneten Pulversprühbeschichtungspistole oder dergleichen Einrichtung zum Versprühen von Beschichtungspulver.

Die Erfindung betrifft ferner ein Verfahren zum Fördern von Beschichtungspulver von einem ersten Pulverreservoir zu einem stromabwärts von einem ersten Pulverreservoir angeordneten zweiten Pulverreservoir oder einer stromabwärts von dem ersten Pulverreservoir angeordneten Pulversprühbeschichtungspistole oder der gleichen Einrichtung zum Versprühen von Beschichtungspulver.

Pulverfördervorrichtungen der eingangs genannten Art sind dem Prinzip nach aus dem Stand der Technik bekannt. Beispielsweise betrifft die deutsche Patentanmeldung Nr. 10 2013 205 895.0 eine Pulverfördervorrichtung mit einer Pulverdichtstrompumpe (englisch: dense phase powder pump), wobei diese Pulverdichtstrompumpe mit Hilfe einer Steuereinrichtung derart angesteuert wird, dass in einem Pulverförder-Betriebsmodus der Pulverdichtstrompumpe Beschichtungspulver von einem ersten Pulverreservoir zu einem stromabwärts von dem ersten Pulverreservoir angeordneten zweiten Pulverreservoir bzw. zu einer stromabwärts angeordneten Pulversprühbeschichtungspistole gefördert wird.

Andererseits betrifft beispielsweise die Druckschrift EP 1 551 558 A1 eine Pulverdichtstrompumpe, welche eine erste Pulverförderkammer und eine parallel zur ersten Pulverförderkammer angeordnete zweite Pulverförderkammer aufweist. Die beiden Pulverförderkammern der aus diesem Stand der Technik bekannten Pulverdichtstrompumpe sind sowohl ansaugseitig als auch förderseitig jeweils durch eine mechanisch betätigte Quetschventilanordnung begrenzt.

Insbesondere bei einem Farbwechsel (Wechsel von einer Pulversorte auf eine andere Pulversorte) ist es erforderlich, dass alle Bereiche der Pulverdichtstrompumpe, die in Kontakt mit dem Beschichtungspulver kommen, sowie die zu der Pulverdichtstrompumpe führenden und abgehenden Pulverleitungen äußerst genau gereinigt werden, damit keine Pulverpartikel des zuerst verwendeten Pulvers mit dem danach verwendeten Pulver vermischt werden. Bereits einzelne Pulverpartikel können zu Beschichtungsfehlern auf dem zu beschichtenden Objekt führen, welche die Beschichtung unbrauchbar machen. Man denke nur an den Wechsel beispielsweise von einem schwarzen oder roten Pulver auf weißes Pulver oder umgekehrt.

Zu diesem Zweck ist gemäß der vorliegenden Erfindung vorgesehen, dass wie in der EP - 2 190 588 B1 die Pulverdichtstrompumpe der Pulverfördervorrichtung wahlweise in einem Pulverförder-Betriebsmodus oder in einen Spül-Betriebsmodus betrieben werden kann. In dem Pulverförder-Betriebsmodus wird mit der Pulverdichtstrompumpe pulverförmiges Material, insbesondere Beschichtungspulver, von einem ersten Pulverreservoir zu einem stromabwärts der Pulverfördervorrichtung angeordneten zweiten Pulverreservoir oder einer stromabwärts der Pulverfördervorrichtung angeordneten Pulversprühbeschichtungspistole oder dergleichen Einrichtung zum Versprühen von Beschichtungspulver befördert. Andererseits werden in dem Spül-Betriebsmodus die Pulverdichtstrompumpe sowie die an die Pulverdichtstrompumpe angeschlossenen Pulverleitungen mit Spülgas, insbesondere Druckluft, durchspült und somit gereinigt.

Mit der vorliegenden Erfindung soll insbesondere die Aufgabe gelöst werden, eine Pulverfördervorrichtung der eingangs genannten Art dahingehend weiterzubilden, dass ein effizienterer Betrieb der Pulverfördervorrichtung in dem Pulverförder-Betriebsmodus und dem Spül-Betriebsmodus möglich ist.

Darüber hinaus ist es eine Aufgabe der Erfindung, eine Pulverfördervorrichtung der eingangs genannten Art strukturell einfacher aufzubauen und dabei den Betrieb der Pulverfördervorrichtung zu optimieren.

Im Hinblick auf die Vorrichtung wird die der Erfindung zugrunde liegende Aufgabe durch den Gegenstand der unabhängigen Patentansprüche 1 und 11 gelöst. Vorteilhafte Weiterbildungen sind in den abhängigen Patentansprüchen angegeben.

Gemäß der Erfindung ist insbesondere vorgesehen, dass in dem Pulverförder-Betriebsmodus der Pulverdichtstrompumpe der Druckwert des zum Verschließen des Pulvereinlassventil und/oder Pulverauslassventils gewählten Betätigungsdruckes niedriger ist als der Druckwert des entsprechenden Betätigungsdruckes in dem Spül-Betriebsmodus der Pulverdichtstrompumpe, wobei mit einem Drucksensor das Druckniveau der Betätigungsluft erfasst wird. Mit dieser Maßnahme ist sichergestellt, dass in dem Spül-Betriebsmodus der Pulverdichtstrompumpe Spül-Druckgas, insbesondere Spül-Druckluft, in die Förderkammer eingeleitet werden kann, ohne dass Gefahr besteht, dass das Spül-Druckgas durch das geschlossene Pulvereinlassventil bzw. das geschlossene Pulverauslassventil entweichen kann. Insbesondere ist damit sichergestellt, dass sich stets ein hinreichender Spüldruck aufbauen kann.

Gemäß einem weiteren Aspekt der vorliegenden Erfindung ist vorgesehen, dass die Steuereinrichtung ausgebildet ist, in Abhängigkeit von dem Betriebsmodus der Pulverdichtstrompumpe den Druckwert eines in die Förderkammer einzuleitenden Druckgases und/oder die Menge eines pro Zeiteinheit in die Förderkammer einzuleitenden Druckgases vorzugsweise automatisch und noch bevorzugter wahlweise automatisch einzustellen. So ist es beispielsweise denkbar, dass in dem Pulverförder-Betriebsmodus der Pulverdichtstrompumpe Transport-Druckgas, insbesondere Transport-Druckluft, in die Förderkammer eingeleitet wird, wobei dieses Transport-Druckgas auf einem ersten Druckniveau liegt. In einem Spül-Betriebsmodus der Pulverdichtstrompumpe kann dann Spül-Druckgas, insbesondere Spül-Druckluft, in die Förderkammer eingeleitet werden, wobei hierzu ein im Vergleich zum ersten Druckniveau höheres (zweites) Druckniveau gewählt wird. Dadurch, dass in dem Spül-Betriebsmodus die Pulverdichtstrompumpe und die an die Pulverdichtstrompumpe angeschlossenen Pulverleitungen mit Spül-Druckgas auf einem relativ hohen Druckniveau gespült werden können, ist die Reinigungseffizienz optimiert. Da andererseits der Druckwert des zum Verschließen des Pulvereinlassventils und/oder Pulverauslassventils gewählten Betätigungsdruckes in Abhängigkeit von dem jeweiligen Betriebsmodus der Pulverdichtstrompumpe bzw. in Abhängigkeit von einem in der Förderkammer herrschenden Druck eingestellt wird, ist sichergestellt, dass auch dann das geschlossene Pulvereinlassventil bzw. das geschlossene Pulverauslassventil kein Spül-Druckgas passieren läßt, wenn für das Spül-Druckgas ein entsprechend höherer Druck gewählt wird.

Gemäß einem weiteren Aspekt der vorliegenden Erfindung ist vorgesehen, dass die Steuereinrichtung ausgebildet ist, in Abhängigkeit einer im Pulverförder-Betriebsmodus der Förderkammer pro Zeiteinheit zugeführten Menge an Transport-Druckgas und/oder in Abhängigkeit einer im Pulverförder-Betriebsmodus von der Pulverdichtstrompumpe pro Zeiteinheit geförderten Menge an Beschichtungspulver den Druckwert des zum Verschließen des Pulvereinlassventils und/oder Pulverauslassventils gewählten Betätigungsdruck vorzugsweise automatisch und noch bevorzugter wahlweise automatisch einzustellen. Mit dieser Maßnahme kann somit je nach Ausstoß der Pulverdichtstrompumpe der Betätigungsdruck der Quetschventile angepasst werden. Insbesondere ist es somit möglich, in einer effizienten Weise die Pulverdichtstrompumpe für unterschiedliche Pulverförderraten einzusetzen. Auch kann die Pulverdichtstrompumpe für spezielle Pulversorten problemlos eingesetzt werden, bei denen eine Pulververblockung leicht auftritt.

Unter dem hierin verwendeten Begriff "Pulverförder-Betriebsmodus" ist ein Betriebsmodus der Pulverdichtstrompumpe zu verstehen, bei welchem abwechselnd durch das geöffnete Pulvereinlassventil eine Pulverportion in die Förderkammer der Pulverdichtstrompumpe eingesaugt wird, während das Pulverauslassventil geschlossen ist, und durch das geöffnete Pulverauslassventil die zuvor in die Förderkammer eingesaugte Pulverportion durch Einleiten von Transport-Druckgas in die Förderkammer abgegeben wird, während das Pulvereinlassventil geschlossen ist.

Unter dem Begriff "Spül-Betriebsmodus" ist insbesondere ein Betriebsmodus zu verstehen, bei welchem das Pulvereinlassventil und/oder das Pulverauslassventil geöffnet ist, während gleichzeitig oder zeitlich versetzt Spül-Druckgas in die Förderkammer eingeleitet wird.

Gemäß einem Aspekt der vorliegenden Erfindung weist die Steuereinrichtung eine Druckregelung auf, welche ausgelegt ist zum Einstellen eines Druckwertes eines während des Pulverförder-Betriebsmodus in die Förderkammer einzuleitenden Transport-Druckgases.

In einer besonders bevorzugten Realisierung der Druckregelung weist diese mindestens eine Drosseleinrichtung auf, um einen Durchflussquerschnitt einer mit der Förderkammer der Pulverdichtstrompumpe strömungsmäßig verbundenen oder verbindbaren Druckgasleitung örtlich einstellen zu können. Denkbar hierbei ist es insbesondere, dass die Drosseleinrichtung mindestens ein Drosselventil, insbesondere in Gestalt eines Regelventils, aufweist, welches ausgebildet ist zum Einstellen eines Druckwertes des während des Pulverförder-Betriebsmodus in die Förderkammer einzuleitenden Transport-Druckgases und/oder zum Einstellen einer pro Zeiteinheit während des Pulverförder-Betriebsmodus in die Förderkammer einzuleitenden Menge an Transport-Druckgas. Alternativ oder zusätzlich hierzu ist das mindestens eine Drosselventil vorzugsweise ferner derart ausgebildet, um einen Druckwert des während des Spül-Betriebsmodus in die Förderkammer einzuleitenden Spül-Druckgases und/oder eine pro Zeiteinheit während des Spül-Betriebsmodus in die Förderkammer einzuleitende Menge an Spül-Druckgas einzustellen.

In einer besonders leicht zu realisierenden aber dennoch effizienten Weise, weist das Drosselventil ein ortsfestes Ventilteil, insbesondere in Gestalt eines Ventilsitzes, und ein relativ dazu bewegliches und dadurch einstellbares Ventilteil zur Veränderung der Öffnungsweite eines Drosselkanals des mindestens einen Drosselventils auf, wobei die geometrische Form des einstellbaren Ventilteils so gewählt ist, dass das Drosselventil eine Durchflusskennlinie mit mindestens zwei im Wesentlichen linearen Bereichen aufweist. Die mindestens zwei im Wesentlichen linearen Bereiche der Durchflusskennlinie weisen dabei vorab festgelegte, unterschiedliche Steigungen auf.

In diesem Zusammenhang ist es denkbar, dass die Steuereinrichtung ausgebildet ist, im Pulverförder-Betriebsmodus das Drosselventil derart anzusteuern, dass der Druckgas-Durchfluss durch das Drosselventil in einem ersten im Wesentlichen linearen Bereich der Durchflusskennlinie liegt, und im Spül-Betriebsmodus das Drosselventil derart anzusteuern, dass der Druckgas-Durchfluss durch das Drosselventil in einem zweiten im Wesentlichen linearen Bereich der Durchflusskennlinie liegt.

Nachfolgend wird die Erfindung unter Bezugnahme auf die beiliegenden Zeichnungen anhand von exemplarischen Ausführungsformen näher beschrieben.

In den Zeichnungen zeigen:
- Fig. 1:: eine schematische Darstellung einer ersten exemplarischen Ausführungsform einer Pulverfördervorrichtung gemäß der vorliegenden Erfindung;
- Fig. 2:: eine schematische Darstellung einer ersten exemplarischen Ausführungsform einer Pulverfördervorrichtung gemäß der vorliegenden Erfindung;
- Fig. 3:: eine Ventilnadel einer Drosseleinrichtung, die als Druckregelung bei einer exemplarischen Ausführungsform der erfindungsgemäßen Pulverfördervorrichtung zum Einsatz kommt; und
- Fig. 4:: eine Durchflusskennlinie eines Drosselventils mit einer Ventilnadel gemäß Fig. 2.

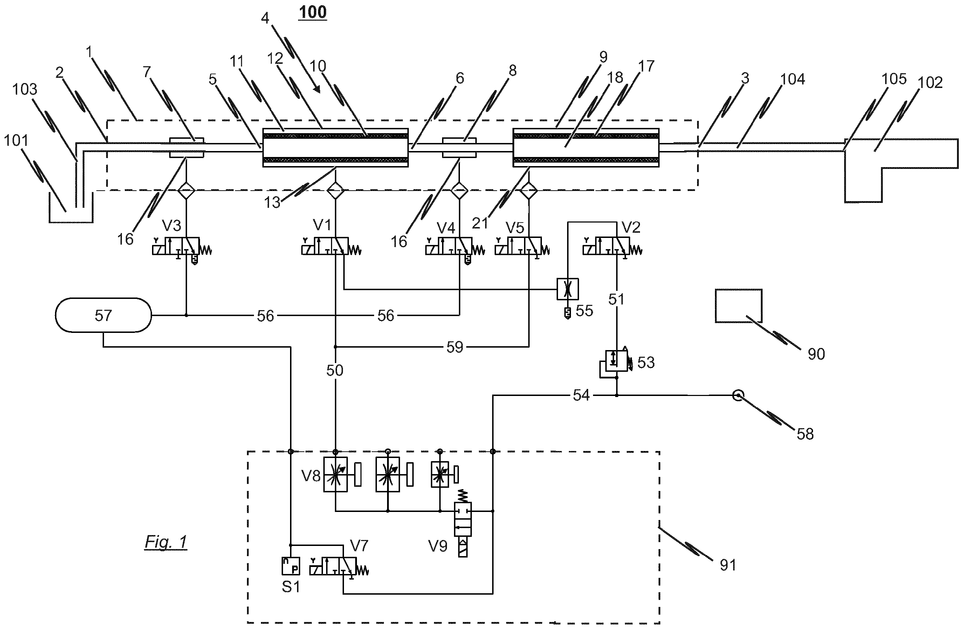

Nachfolgend wird unter Bezugnahme auf die Darstellung in Fig. 1 eine erste exemplarische Ausführungsform der erfindungsgemäßen Pulverfördervorrichtung 100 beschrieben. Die Pulverfördervorrichtung 100 dient insbesondere zum Fördern von Beschichtungspulver von einem ersten Pulverreservoir 101 zu einer stromabwärts von der Pulverfördervorrichtung 100 angeordneten Pulversprühbeschichtungspistole 102. Anstelle der Pulversprühbeschichtungspistole 102 kann auch eine andere Einrichtung zum Versprühen von Beschichtungspulver auf ein zu beschichtendes Objekt oder aber auch ein zweites Pulverreservoir zum Einsatz kommen.

Die Pulverfördervorrichtung 100 gemäß der in Fig. 1 dargestellten exemplarischen Ausführungsform weist mindestens eine (in der Zeichnung gemäß Fig. 1 genau eine) Pulverdichtstrompumpe 1 auf. Der Pulvereinlass 2 der Pulverdichtstrompumpe 1 ist mit Hilfe einer Pulverleitung 103, insbesondere mit Hilfe eines Ansaugrohres oder dergleichen, strömungsmäßig mit dem ersten Pulverreservoir 101 verbunden oder verbindbar. Am entgegengesetzten Endbereich der Pulverdichtstrompumpe 1 ist ein Pulverauslass 3 vorgesehen, welcher mit Hilfe einer Pulverleitung 104, insbesondere mit Hilfe eines Pulverschlauches, mit einem Beschichtungspulvereinlass 105 der Pulversprühbeschichtungspistole 102 verbunden bzw. verbindbar ist.

Obwohl in Fig. 1 nicht explizit dargestellt, sind bei der exemplarischen Ausführungsform der Pulverfördervorrichtung 100 sowohl der Pulvereinlass 2 als auch der Pulverauslass 3 der Pulverdichtstrompumpe 1 jeweils als Schlauchanschlussstutzen ausgebildet, an den die entsprechende Pulverleitung 103 bzw. 104 aufsteckbar und mit einer Schlauchklemme fixierbar ist. Selbstverständlich kommen aber auch andere Ausführungsformen für den Pulvereinlass 2 bzw. den Pulverauslass 3 der Pulverdichtstrompumpe 1 in Frage.

Die bei der in Fig. 1 dargestellten exemplarischen Ausführungsform der Pulverfördervorrichtung 100 zum Einsatz kommende Pulverdichtstrompumpe 1 zeichnet sich unter anderem dadurch aus, dass diese als Ein-Kammer-Pulverdichtstrompumpe ausgebildet ist, wobei zur Förderung von Beschichtungspulver von dem ersten Pulverreservoir 101 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist. Allerdings ist die Erfindung nicht auf Pulverfördervorrichtungen beschränkt, bei denen eine Ein-Kammer-Pulverdichtstrompumpe zum Einsatz kommt. Vielmehr umfasst die Erfindung auch solche Pulverfördervorrichtungen, bei denen Mehr-Kammer-Pulverdichtstrompumpen zum Einsatz kommen.

Die Pulverdichtstrompumpe 1, welche bei der in Fig. 1 schematisch dargestellten Pulverfördervorrichtung 100 zum Einsatz kommt, ist hier jedoch als Ein-Kammer-Pulverdichtstrompumpe ausgebildet, wobei zur Förderung von Beschichtungspulver von dem ersten Pulverreservoir 1 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist. Diese Pulverförderkammer 4 weist an einem ersten Endbereich einen Pulvereinlass 5 auf, welcher in Richtung des Pulvereinlasses 2 der Pulverdichtstrompumpe 1 zeigt. Ferner weist die Pulverförderkammer 4 einen in Richtung des Pulverauslasses 3 der Pulverdichtstrompumpe zeigenden Pulverauslass 6 auf. Am Pulvereinlass 5 der Pulverförderkammer 4 ist unmittelbar angrenzend ein Pulvereinlassventil 7 angeordnet, und zwar derart, dass dieses Pulvereinlassventil 7 zwischen dem Pulvereinlass 5 der Pulverförderkammer 4 und dem Pulvereinlass 2 der Pulverdichtstrompumpe 1 liegt. In gleicher Weise ist unmittelbar angrenzend an den Pulverauslass 6 der Pulverförderkammer 4 ein Pulverauslassventil 8 angeordnet.

Wenn bei der Pulverfördervorrichtung 100 eine als Ein-Kammer-Pulverdichtstrompumpe ausgebildete Pulverdichtstrompumpe zum Einsatz kommt, ist es von Vorteil, wenn am Pulverauslassbereich der Pulverdichtstrompumpe 1 das Pulverauslassventil 8 nicht unmittelbar zwischen dem Pulverauslass 6 der Pulverförderkammer 4 und dem Pulverauslass 3 der Pulverdichtstrompumpe 1 angeordnet ist. Vielmehr ist bei diesen Ausführungsformen von Vorteil, wenn zwischen dem Pulverauslassventil 8 und dem Pulverauslass 3 der Pulverdichtstrompumpe 1 noch eine Zusatzdruckluft-Einlassvorrichtung 9 angeordnet ist. Wie es anschließend näher beschrieben wird, dient diese Zusatzdruckluft-Einlassvorrichtung 9 zum bedarfsweisen Einspeisen von zusätzlicher Transportdruckluft in den Pulverweg zwischen dem Pulverauslassventil 8 und dem Pulverauslass 3 der Pulverdichtstrompumpe 1.

An dieser Stelle ist darauf hinzuweisen, dass es nicht zwingend erforderlich ist, die Zusatzdruckluft-Einlassvorrichtung 9 zwischen dem Pulverauslassventil 8 und dem Pulverauslass 3 der Ein-Kammer-Pulverdichtstrompumpe 1 anzuordnen. Die mit der Zusatzdruckluft-Einlassvorrichtung 9 erzielbaren Effekte, die nachfolgend näher beschrieben werden, lassen sich auch dann realisieren, wenn eine Zusatzdruckluft-Einlassvorrichtung 9 hinter dem Pulverauslass 3 der Pulverdichtstrompumpe 1 angeordnet ist.

Wie es insbesondere der Darstellung in Fig. 1 entnommen werden kann, liegen der Pulvereinlass 2 der Pulverdichtstrompumpe 1, das Pulvereinlassventil 7, der Pulvereinlass 5 der Pulverförderkammer 4, die Pulverförderkammer 4, der Pulverauslass 6 der Pulverkammer 4, die Zusatzdruckluft-Einlassvorrichtung 9 sowie der Pulverauslass 3 der Pulverdichtstrompumpe 1 entlang einer gemeinsamen Längsachse. Mit anderen Worten, der Pulvereinlass 2 der Pulverdichtstrompumpe 1 ist am entgegengesetzten Ende des Pulverauslasses 3 der Pulverdichtstrompumpe 1 vorgesehen.

An dieser Stelle ist darauf hinzuweisen, dass die Erfindung nicht auf Pulverfördervorrichtungen beschränkt ist, bei denen Pulverdichtstrompumpen zum Einsatz kommen, deren Pulvereinlass 2 und Pulverauslass 3 an entgegengesetzten Endbereichen angeordnet sind. Vielmehr eignet sich die Erfindung auch bei Pulverdichtstrompumpen, deren Pulvereinlass und Pulverauslass an ein und demselben Endbereich der Pulverdichtstrompumpe vorgesehen sind.

Nachfolgend werden der Aufbau und die Funktionsweise der Pulverförderkammer 4 der in Fig. 1 schematisch dargestellten Ausführungsform der bei der erfindungsgemäßen Pulverfördervorrichtung 100 zum Einsatz kommenden Pulverdichtstrompumpe 1 näher beschrieben.

Wie es insbesondere der schematischen Darstellung in Fig. 1 entnommen werden kann, ist die Pulverförderkammer 4 zwischen ihrem Pulvereinlass 5 und ihrem Pulverauslass 6 durch die zylindrische Wand eines rohrartigen Filters 10 gebildet. Dieser rohrartige Filter 10 ist für Luft, jedoch nicht für Beschichtungspulver durchlässig und kann beispielsweise aus Sintermaterial bestehen. Der als Filterrohr ausgebildete Filter 10 ist von einer Zwischenkammer 11 umgeben, die auf ihre Außenseite von einem Gehäuse der Pulverförderkammer 4 begrenzt ist.

Durch das Gehäuse mündet eine Luftaustauschöffnung 13, welche strömungsmäßig an ein Steuerventil V1 (hier: Magnetventil) angeschlossen ist. Über das Steuerventil V1 ist die Pulverförderkammer 4 wechselweise mit Transportdruckluft aus einer Druckluftversorgungsleitung 50 versorgbar oder mit Vakuum bzw. Unterdruck einer Vakuumquelle beaufschlagbar.

Bei der in Fig. 1 schematisch dargestellten Ausführungsform der erfindungsgemäßen Pulverfördervorrichtung 100 weist die Vakuumquelle einen Injektor 55 auf, welchem Injektordruckluft von einer Druckluftversorgungsleitung 51 bzw. einer Druckluftquelle 58, beispielsweise über einen Druckregler 53 und ein weiteres Steuerventil V2 (hier: Magnetventil), zugeführt wird.

Bei der dargestellten Ausführungsform ist die Druckluftquelle 58 als ein Eingangsdruckregler ausgeführt, der einen an einem Versorgungsanschluss (nicht gezeigt) anliegenden Eingangsdruck auf einen internen konstanten Versorgungsdruck von 6 bis 8 bar einzuregeln.

Unabhängig von der konkreten Ausführung der Druckluftquelle 58 ist es von Vorteil, wenn es sich hierbei um eine Einrichtung handelt, mit der ein vorab festgelegter oder festlegbarer konstanter Versorgungsdruck bereitgestellt wird.

Um während einer Saugphase der im Pulverförder-Betriebsmodus betriebenen Pulverdichtstrompumpe 1 über den Pulvereinlass 2 der Pulverdichtstrompumpe 1 aus dem ersten Pulverreservoir 101 Beschichtungspulver in die Pulverförderkammer 4 einsaugen zu können, wird das am Pulverauslass 6 der Pulverförderkammer 4 angeordnete Pulverauslassventil 8 geschlossen und das zwischen dem Pulvereinlass 2 der Pulverdichtstrompumpe 1 und dem Pulvereinlass 5 der Pulverförderkammer 4 angeordnete Pulvereinlassventil 7 geöffnet. Gleichzeitig mit dem Betätigen des Pulverauslassventils 8 und des Pulvereinlassventils 7 oder unmittelbar anschließend daran wird über das Steuerventil V1 und der damit verbundenen Luftaustauschöffnung 13 die Pulverförderkammer 4 mit der Vakuumquelle strömungsmäßig verbunden, so dass in der Pulverförderkammer 4 ein Unterdruck anliegt und Beschichtungspulver aus dem ersten Pulverreservoir 101 eingesaugt werden kann.

Nach dem Einsaugen von Beschichtungspulver in die Pulverförderkammer 4 erfolgt ein Wechsel von der Saugphase zu der Ausstoßphase von Beschichtungspulver aus der Förderkammer 4. Hierzu wird das Pulvereinlassventil 7 geschlossen und das Pulvereinlassventil 8 geöffnet, während das Steuerventil V1 eine strömungsmäßige Verbindung der Luftaustauschöffnung 13 mit der Druckluftversorgungsleitung 50 bereitstellt, so dass die während der Saugphase in die Pulverförderkammer zuvor eingesaugte Beschichtungspulverportion mittels der über die Luftaustauschöffnung 13 zugeführten Transportdruckluft durch das offene Pulverauslassventil ausgestoßen wird. Wie dem Pneumatikschema gemäß Fig. 1 entnommen werden kann, ist bei dieser Ausführungsform die Druckluftversorgungsleitung 50 über eine Druckregelung 91 mit der Druckluftversorgungsquelle 58 strömungsmäßig verbunden.

Anschließend erfolgt wieder die Betriebsphase des Einsaugens von Beschichtungspulver über den Pulvereinlass 2 der Pulverdichtstrompumpe 1 und über das geöffnete Pulvereinlassventil 7. Dieser Wechsel der Betriebsphasen wiederholt sich im Pulverförder-Betriebsmodus der Pulverdichtstrompumpe ständig.

Hierin wird unter dem Begriff "Pumpenzyklus" ein Zyklus bestehend aus einer Saugphase und einer Ausstoßphase verstanden.

Bei der erfindungsgemäßen Pulverfördervorrichtung 100 sind die eingangs- und ausgangsseitig der Pulverförderkammer 4 angeordneten Ventile (Pulvereinlassventil 7, Pulverauslassventil 8) jeweils als Quetschventil ausgebildet. Bei der in Fig. 1 schematisch dargestellten Ausführungsform weisen die jeweils als Quetschventil ausgebildeten Pulvereinlass- und Pulverauslassventile 7, 8 jeweils einen flexiblen, elastischen Schlauch auf, der als Ventilkanal dient. Der flexible, elastische Schlauch ist zum Schließen des entsprechenden Ventils (Pulvereinlassventil 7, Pulverauslassventil 8) mittels Betätigungsdruckluft in einer den flexiblen, elastischen Schlauch umgebenen Druckkammer zusammenquetschbar.

Zu diesem Zweck ist in jeder Druckkammer jeweils eine Luftaustauschöffnung 16 vorgesehen, die an ein entsprechendes Steuerventil V3, V4 (hier: Magnetventil) angeschlossen ist. Die Steuerventile V3, V4 dienen dazu, wechselweise die Drucckammern der beiden jeweils als Quetschventil ausgebildeten Pulvereinlass- bzw. Pulverauslassventile 7, 8 mit Überdruck aus einer Druckluftversorgungsleitung 56 zu beaufschlagen.

Wie in Fig. 1 schematisch dargestellt, kann die Druckluftversorgungsleitung 56 mit einem Druckspeicher 57 verbunden sein. Bei der Ausführungsform gemäß Fig. 1 ist dieser Druckspeicher 57 seinerseits über die Druckregelung 91 mit der Druckluftquelle 58 verbunden. Selbstverständlich ist es aber auch denkbar, dass die Druckluftversorgungsleitung 56 direkt mit der Druckluftquelle 58 (d.h. ohne Zwischenschaltung des Druckspeichers 57) verbunden ist.

Der flexible, elastische Schlauch des als Quetschventil ausgebildeten Pulvereinlassventils 7 bzw. Pulverauslassventils 8 hat vorzugsweise eine solche Elastizität oder Eigenspannung, dass er sich nach Wegfall des Druckes der Betätigungsdruckluft in der Druckkammer selbsttätig wieder streckt und dadurch den entsprechenden Ventilkanal öffnet. Um das Öffnen der Quetschventile zu unterstützen und somit die realisierbare Schaltfrequenz der Pulverdichtstrompumpe 1 zu erhöhen, ist es alternativ oder zusätzlich denkbar, dass über die entsprechenden Luftaustauschöffnungen 16 in den Druckkammern wahlweise ein Unterdruck angelegt wird.

Um zu erreichen, dass bei der in Fig. 1 schematisch dargestellten Pulverfördervorrichtung 100 stromabwärts des Pulverauslasses 3 der Ein-Kammer-Pulverdichtstrompumpe 1 ein homogener Pulverstrom ohne störende Pulsaktionen vorliegt, kommt die bereits erwähnte Zusatzdruckluft-Einlassvorrichtung 9 zum Einsatz, welche bei der dargestellten exemplarischen Ausführungsform am Ausgang des Pulverauslassventils 8 bzw. am Pulverauslass 3 der Pulverdichtstrompumpe 1 vorgesehen ist, um dort bedarfsweise Zusatz-Transportdruckluft in den Pulverweg einspeisen zu können.

Bei der in Fig. 1 dargestellten exemplarischen Ausführungsform der erfindungsgemäßen Pulverfördervorrichtung 100 weist die zum Einsatz kommende ZusatzDruckluft-Einlassvorrichtung 9 ein Filterrohr 17 auf, welches einen Umfang von mindestens 180° (bei der dargestellten Ausführungsform einen Umfang von 360°) hat und zumindest auf einer Teillänge des entsprechenden Pulverweges eine Kanalwandinnenfläche auf mindestens 180° (bei der in Fig. 1 dargestellten Ausführungsform eine Kanalwandinnenfläche auf 360°) des Pulverwegumfangs bildet.

Mit anderen Worten, bei der in Fig. 1 schematisch dargestellten Ausführungsform der erfindungsgemäßen Pulverfördervorrichtung 100 weist die Zusatzdruckluft-Einlassvorrichtung 9 ein Filterrohr 17 auf, welches den entsprechenden Pulverweg zumindest auf einer Teillänge um 360° umgibt, so dass die von der Pulverförderkammer 4 der Pulverdichtstrompumpe 1 während einer Pulverausstoßphase ausgestoßene Pulverportion durch den von dem Filterrohr 17 gebildeten Filterrohrkanal 18 homogen hindurch strömen kann.

Eine bei der in Fig. 1 schematisch dargestellten Ausführungsform als Druckluftringkammer ausgebildete Druckluftkammer umgibt das Filterrohr 17 auf seinem Außenumfang. Die hier als Druckluftringkammer ausgebildete Druckluftkammer wird an ihrem radial inneren Umfang von dem Filterrohr 17 und mit Abstand von dem Filterrohr 17 an ihrem radial äußerem Umfang von einem Gehäuse umgeben. In dem Gehäuse ist eine Luftaustauschöffnung 21 vorgesehen, über welche bedarfsweise Druckluft von einer Druckluftleitung 59 über ein Steuerventil V5 (hier: Magnetventil) in die Druckluftkammer und von dort durch das Filterrohr 17 in den Filterrohrkanal 18 strömen kann.

Abhängig von der pro Zeiteinheit in den Pulverweg einzuspeisenden Menge an Zusatz-Transportdruckluft ist die Druckluftkammer und der von dem Filterrohr 17 gebildete Filterrohrkanal 18 entsprechend großvolumiger auszuführen.

Wie bereits angedeutet, besteht das Filterrohr 17 der Zusatzdruckluft-Einlassvorrichtung 9 aus mikroporösem Material derart, dass es für Luft, jedoch nicht für Beschichtungspulver durchlässig ist. Das Filterrohr 17 besteht vorzugsweise aus einem Sinterkörper, beispielsweise aus Metall oder Kunststoff, oder aus einer Metall oder Kunststoff enthaltenden Materialmischung. Ferner kann es aus einem Material bestehen und/oder durch eine Filtermembran gebildet sein.

Durch die relative große Oberfläche des Filterrohres 17 an seinem Innenumfang kann bereits mit einer geringen Menge an Druckluft die axiale Pulververteilung im Pulverrohrkanal 18 und damit auch im Pulverweg stromabwärts des Pulverauslasses 3 der Pulverdichtstrompumpe 1 homogenisiert werden. Dadurch können Pulsaktionen der Pulverströmung im Pulverweg vermieden oder zumindest reduziert werden. Ferner kann eine Homogenisierung der Pulverdichte in Längsrichtung und über den Querschnitt des Pulverweges erzielt werden.

Gemäß der in Fig. 1 schematisch dargestellten Ausführungsform der erfindungsgemäßen Pulverfördervorrichtung 100 wird die Zusatzdruckluft der Zusatzdruckluft-Einlassvorrichtung 9 pulsierend mit einer Pulsfrequenz zugeführt, welche gleich groß wie die Frequenz der Pulverförderkammer 4 ist, mit welcher die Pulverförderkammer 4 Pulverportionen abgibt. Hierzu ist vorgesehen, dass die beiden Ventile V1 und V5 gegenphasig betrieben werden. Auf diese Weise ist sichergestellt, dass die im Pulverförder-Betriebsmodus der Pulverdichtstrompumpe 1 pro Zeiteinheit in den Pulverweg eingeleitete Menge an Transportdruckluft zeitlich konstant ist. Mit anderen Worten, im Pulverförder-Betriebsmodus wird bei konstanter Pulverförderrate zu jedem Zeitpunkt stets die gleiche Menge an Transportdruckluft in den Pulverweg eingespeist.

Wie bereits angedeutet, ist das Pulvereinlassventil 7 und das Pulverauslassventil 8 der bei der erfindungsgemäßen Pulverfördervorrichtung 100 zum Einsatz kommenden Pulverdichtstrompumpe 1 jeweils als Quetschventil (englisch: pinch valve) ausgeführt, da sich in Quetschventilen weniger Beschichtungspulver ablagern kann als in anderen Ventilarten, und weil sich Pulverablagerungen durch die Luftströmung in ihnen leicht reinigen lassen. Quetschventile sind mittels Druckluft oder mittels Unterdruck steuerbare Ventile.

Zur Steuerung des Betriebes der Pulverdichtstrompumpe 1 kommt die bereits erwähnte Steuereinrichtung 90 zum Einsatz, welche in Fig. 1 nur schematisch angedeutet ist. Die Steuereinrichtung 90 ist ausgebildet, die einzelnen ansteuerbaren Komponenten der Pulverfördervorrichtung 100, insbesondere die Steuerventile V1, V2, V3, V4 und V5, geeignet anzusteuern und deren Betätigung zu koordinieren.

Gemäß der vorliegenden Erfindung ist die Steuereinrichtung 90 insbesondere ausgebildet, die ansteuerbaren Komponenten der Pulverfördervorrichtung 100 geeignet anzusteuern, um die Pulverdichtstrompumpe wahlweise in einem Pulverförder-Betriebsmodus oder in einem Spül-Betriebsmodus zu betreiben. Erfindungswesentlich ist dabei, dass die Steuereinrichtung ausgebildet ist, um vorzugsweise automatisch und noch bevorzugter wahlweise automatisch in Abhängigkeit von dem jeweiligen Betriebsmodus der Pulverdichtstrompumpe 1 den Druckwert des zum Verschließen des Pulvereinlassventils 7 und/oder Pulverauslassventils 8 zu erfassen und einzustellen.

Hierzu ist es beispielsweise denkbar, wenn für jedes Quetschventil verschiedene Sollwerte für den Betätigungsdruck vorgegeben sind, und zwar einen ersten Sollwert für den Betätigungsdruck im Pulverförder-Betriebsmodus und einen zweiten Sollwert für den Betätigungsdruck im Spül-Betriebsmodus.

Alternativ oder zusätzlich hierzu ist die Steuereinrichtung 90 ausgebildet, in Abhängigkeit von einem in der Förderkammer 4 herrschenden Druck den Druckwert des zum Verschließen des Pulvereinlassventils 7 und/oder zum Verschließen des Pulverauslassventils 8 gewählten Betätigungsdruck ebenfalls vorzugsweise automatisch und noch bevorzugter wahlweise automatisch einzustellen. Bei dieser Realisierung ist es beispielsweise denkbar, dass mit Hilfe eines Drucksensors der Druckwert des in der Förderkammer 4 herrschenden Druckes erfasst wird, wobei in Abhängigkeit von dem erfassten Druckwert der Druckwert des zum Verschließen des Pulvereinlassventils 7 und/oder zum Verschließen des Pulverauslassventils 8 gewählten Betätigungsdruck entsprechend eingestellt wird. Alternativ oder zusätzlich hierzu ist es selbstverständlich auch denkbar, dass der Druckwert des in der Förderkammer 4 herrschenden Druckes andersartig ermittelt wird, beispielsweise mit Hilfe eines in der Druckluftleitung 59 vorgesehenen Drucksensors oder dergleichen Einrichtung.

Darüber hinaus ist die Steuereinrichtung 90 ausgebildet, in Abhängigkeit von dem Betriebsmodus der Pulverdichtstrompumpe 1 den Druckwert des in die Förderkammer 4 einzuleitenden Druckgases und/oder die Menge des pro Zeiteinheit in die Förderkammer einzuleitenden Druckgases vorzugsweise automatisch und noch bevorzugter wahlweise automatisch einzustellen.

Bei der in Fig. 1 schematisch dargestellten Ausführungsform der erfindungsgemäßen Pulverfördervorrichtung 100 ist insbesondere vorgesehen, dass von dem Benutzer der Pulverfördervorrichtung 100 beispielsweise über die Steuereinrichtung 90 zunächst der Betriebsmodus der Pulverdichtstrompumpe 1 ausgewählt wird. Hierbei stehen insbesondere der Pulverförder-Betriebsmodus und der Spül-Betriebsmodus zur Auswahl. Abhängig von dem ausgewählten Betriebsmodus der Pulverdichtstrompumpe 1 werden dann von der Steuereinrichtung 90 die einzelnen ansteuerbaren Komponenten der Pulverfördervorrichtung 100 entsprechend angesteuert. Dies betrifft insbesondere auch die ansteuerbaren Komponenten der Druckregelung 91, um den Betätigungsdruck für die Pulvereinlass- und Pulverauslassventile 7, 8 und den Druckwert des in die Förderkammer 4 einzuleitenden Druckgases und/oder die Menge des pro Zeiteinheit in die Förderkammer einzuleitenden Druckgases einzustellen.

In dem Pulverförder-Betriebsmodus der Pulverdichtstrompumpe 1 wird abwechselnd durch das geöffnete Pulvereinlassventil 7 eine Pulverportion aus dem Pulverreservoir 101 in die Förderkammer 4 der Pulverdichtstrompumpe 1 eingesaugt. Während dieser Saugphase ist das Pulverauslassventil 8 geschlossen. Anschließend wird die zuvor in die Förderkammer 4 der Pulverdichtstrompumpe 1 eingesaugte Pulverportion durch Einleiten von Transport-Druckgas in die Förderkammer 4 durch das geöffnete Pulverauslassventil 8 abgegeben. Während des Pulverausstoßes aus der Förderkammer 4 ist das Pulvereinlassventil 7 geschlossen.

Wird hingegen die Pulverdichtstrompumpe 1 in ihrem Spül-Betriebsmodus betrieben, ist entweder das Pulvereinlassventil 7 oder das Pulverauslassventil 8 geöffnet, während das andere der beiden Ventile 8, 7 geschlossen ist und während gleichzeitig oder zeitlich versetzt Spül-Druckgas, insbesondere Spül-Druckluft, in die Förderkammer 4 der Pulverdichtstrompumpe 1 eingeleitet wird.

Im geöffneten Zustand des Pulvereinlassventil 7 werden im Spül-Betriebsmodus der Pulverdichtstrompumpe 1 insbesondere die Förderkammer 4 der Pulverdichtstrompumpe 1, der Pulverweg zwischen dem Pulvereinlass 5 und dem Pulvereinlass 7, der Ventilkanal des als Quetschventil ausgeführten Pulvereinlassventils 7, der Pulverkanal zwischen dem Pulvereinlassventil 7 und dem Pulvereinlass 2 der Pulverdichtstrompumpe 1 sowie eine an dem Pulvereinlass 2 gegebenenfalls angeschlossene Pulverleitung 103 mit dem in die Förderkammer eingeleiteten Spül-Druckgas durchströmt (durchspült), infolgedessen die Förderkammer 4 der Pulverdicht-strompumpe 1 und deren ansaugseitiger Bereich gereinigt werden.

Wenn hingegen das Pulverauslassventil 8 geöffnet und das Pulvereinlassventil 7 geschlossen ist, werden in dem Spül-Betriebsmodus der Pulverdichtstrompumpe 1 insbesondere die Pulverkammer 4 der Pulverdichtstrompumpe 1, der Pulverweg zwischen dem Pulverauslass 6 der Pulverförderkammer 4 und dem Pulverauslassventil 8, der Ventilkanal des als Quetschventil ausgebildeten Pulverauslassventils 8, der Pulverweg zwischen dem Pulverauslassventil 8 und dem Pulverauslass 3 der Pulverdichtstrompumpe 1 sowie eine gegebenenfalls an dem Pulverauslass 3 der Pulverdichtstrompumpe 1 angeschlossene Pulverleitung 104 von dem in die Förderkammer 4 eingeleiteten Spül-Druckgas durchspült, so dass die Förderkammer der Pulverdichtstrompumpe 1 und deren ausstoßseitiger Bereich gereinigt werden.

Der Spül-Betriebsmodus ist im Hinblick auf die Reinigungswirkung am effizientesten, wenn als Spül-Druckgas Druckluft mit einem relativ hohen Druckniveau (beispielsweise bis zu 6 bar) verwendet wird. Hingegen genügt es in der Regel im Förderbetrieb der Pulverdichtstrompumpe 1, d.h. im Pulverförder-Betriebsmodus dieser, in die Förderkammer 4 der Pulverdichtstrompumpe 1 Transport-Druckgas mit einem relativ geringen Druckniveau (beispielsweise bis maximal 3 bar) einzuleiten.

Damit im Spül-Betriebsmodus die Ansaugseite der Pulverdichtstrompumpe 1 bzw. die Ausstoßseite der Pulverdichtstrompumpe 1 effizient gereinigt werden kann, ist dafür Sorge zu tragen, dass das Spül-Druckgas, welches in die Förderkammer 4 der Pulverdichtstrompumpe 1 eingeleitet wird, ohne Verluste den ansaugseitigen Bereich bzw. den ausstoßseitigen Bereich der Pulverdichtstrompumpe 1 durchströmt. Mit anderen Worten, ein effizientes Reinigen der Förderkammer 4 zusammen mit dem ansaugseitigen Bereich der Pulverdichtstrompumpe 1 bzw. ein effizientes Reinigen der Förderkammer 4 der Pulverdichtstrompumpe 1 zusammen mit dem ausstoßseitigen Bereich ist dann gegeben, wenn das Pulverauslassventil 8 bzw. das Pulvereinlassventil 7 gasdicht verschlossen sind.

Um dies sicherzustellen und um insbesondere zu verhindern, dass das in die Förderkammer 4 eingeleitete und unter hohem Druck stehende Spül-Druckgas durch das geschlossene Pulvereinlassventil 7 bzw. Pulverauslassventil 8 dringen kann, ist gemäß der Erfindung der Druckwert des zum Verschließen des Pulvereinlassventils 7 und/oder Pulverauslassventils 8 gewählten Betätigungsdruckes im Spül-Betriebsmodus der Pulverdichtstrompumpe 1 höher als der Druckwert des Betätigungsdruckes des Pulvereinlass-und Pulverauslassventils 7, 8 im Pulverförder-Betriebsmodus der Pulverdichtstrompumpe 1.

Zu diesem Zweck ist bei der erfindungsgemäßen Pulverfördervorrichtung 100 die bereits erwähnte Druckregulierung bzw. Druckregelung 91 vorgesehen, welche ein Steuerventil V7, insbesondere Magnetventil, aufweist, wobei dieses Steuerventil V7 zwischen der Druckluftquelle 58 und dem Druckspeicher 57 strömungsmäßig angeschlossen ist. Ferner weist die Druckregelung 91 einen Drucksensor auf, mit welchem das Druckniveau der in dem Druckspeicher 57 zwischengelagerten Betätigungsdruckluft für die Quetschventile 7, 8 vorzugsweise kontinuierlich oder zu vorgegebenen Zeiten und/oder Ereignissen erfasst wird. Im Pulverförder-Betriebsmodus der Pulverdichtstrompumpe 1 wird über das Ventil V7 der Druckwert der in dem Druckspeicher 57 zwischengespeicherten Betätigungsdruckluft derart eingestellt, dass dieser auf einem ersten Druckniveau von beispielsweise bis maximal 3 bar liegt. Dieser Betätigungsdruck genügt, um das als Quetschventil ausgebildete Pulvereinlassventil 7 bzw. das als Quetschventil ausgebildete Pulverauslassventil 8 im Pulverförder-Betriebsmodus gasdicht verschließen zu können.

Im Spül-Betriebsmodus der Pulverdichtstrompumpe 1 hingegen ist das Druckniveau der in dem Druckspeicher 57 zwischengespeicherten Betätigungsdruckluft entsprechend anzuheben, da - wie bereits ausgeführt - im Spül-Betriebsmodus der Pulverdichtstrompumpe 1 das Pulvereinlassventil 7 bzw. das Pulverauslassventil 8 gegenüber höheren Drücken gasdicht verschließbar sein muss. Von daher wird im Spül-Betriebsmodus über das Ventil V7 der Druckspeicher 57 so lange mit der Druckluftquelle 58 strömungsmäßig verbunden, bis über den Drucksensor S1 erfasst wird, dass der Druckwert der in dem Druckspeicher 57 zwischengespeicherten Betätigungsdruckluft für die Quetschventile 7, 8 auf einem entsprechend höheren (zweiten) Druckniveau liegt, welcher beispielsweise in einem Bereich zwischen 2 bis 6 bar liegt.

Wie bereits dargelegt, ist es selbstverständlich aber auch denkbar, dass die jeweils als Quetschventil ausgebildeten Pulvereinlass- und Pulverauslassventile 7, 8 direkt, d.h. ohne Zwischenschaltung des Druckspeichers 57, über das Ventil V7 mit der Druckluftquelle 58 verbindbar sind. In diesem Fall müsste das Ventil V7 zusammen mit dem Drucksensor S1 die Druckregulierung übernehmen. Dies ist beispielsweise dadurch realisierbar, dass das Ventil V7 als Druckregelventil ausgebildet ist.

Die Steuereinrichtung 90 passt nicht nur den Druckwert der Betätigungsdruckluft für die als Quetschventil ausgebildeten Ventile 7, 8 in Abhängigkeit von dem Betriebsmodus der Pulverdichtstrompumpe 1 an, sondern auch den Druckwert des in die Förderkammer 4 der Pulverdichtstrompumpe 1 einzuleitenden Druckgases (entweder Transport-Druckgas bzw. Transport-Druckluft oder Spül-Druckgas bzw. Spül-Druckluft).

Im Einzelnen weist die Steuereinrichtung 90 hierzu eine beispielsweise zur Druckregelung 91 gehörende Druckregulierung für das in die Förderkammer 4 der Pulverdichtstrompumpe 1 einzuleitende Druckgas auf. Diese Druckregulierung wird bei der in Fig. 1 schematisch dargestellten Ausführungsform der erfindungsgemäßen Pulverfördervorrichtung 100 dadurch realisiert, dass die Luftaustauschöffnung 13, welche in dem Gehäuse 12 der Pulverförderkammer 4 vorgesehen ist, über die Druckluftleitung 50 und ein als Drosseleinrichtung dienendes Drosselventil V8 und ein Magnetventil V9 mit der Druckluftquelle 58 strömungsmäßig verbunden oder verbindbar ist. Abhängig von dem für die Pulverdichtstrompumpe 1 gewählten Betriebsmodus (Pulverförder-Betriebsmodus oder Spül-Betriebsmodus) wird mit Hilfe des Drosselventils V8 der von der Druckluftquelle 58 bereitgestellte Betriebsdruck von beispielsweise 6 bar auf das Druckniveau reduziert, welches in dem entsprechenden Betriebsmodus der Pulverdichtstrompumpe 1 benötigt wird.

Im Einzelnen ist bei der in Fig. 1 schematisch dargestellten Ausführungsform die die Druckregelung 91 ausgelegt, im Pulverförder-Betriebsmodus der Pulverdichtstrompumpe 1 den Druckwert des in die Förderkammer 4 einzuleitenden Transport-Druckgases so einzustellen, dass dieser bei bis 5 bar liegt, und/oder im Pulverförder-Betriebsmodus der Pulverdichtstrompumpe 1 die pro Zeiteinheit der Förderkammer 4 zuzuführende Menge an Transport-Druckgas auf einen Wert von 0,2 bis 4,0 m³/h einzustellen, und/oder im Spül-Betriebsmodus der Pulverdichtstrompumpe 1 den Druckwert des in die Förderkammer 4 einzuleitenden Spül-Druckgases so einzustellen, dass dieser in einem Bereich zwischen 4 bis 10 bar liegt, und/oder im Spül-Betriebsmodus der Pulverdichtstrompumpe 1 die pro Zeiteinheit der Förderkammer 4 zuzuführende Menge an Spül-Druckgas auf einen Wert von 5,0 bis 25 m³/h einzustellen. Diese Druckregulierung wird bei der in Fig. 1 dargestellten erfindungsgemäßen Ausführungsform mit Hilfe der als Drosselventil V8 ausgeführten Drosseleinrichtung, auf deren Aufbau später näher eingegangen wird, bewirkt.

Andererseits ist die Druckregelung 91 ausgelegt, im Pulverförder-Betriebsmodus den Druckwert des an das Pulvereinlassventil 7 und/oder Pulverauslassventil 8 anzulegenden Betätigungsdruckes auf einem Bereich von maximal bis 3 bar einzustellen, und im Spül-Betriebsmodus den Druckwert des an das Pulvereinlassventil 7 und/oder Pulverauslassventil 8 anzulegenden Betätigungsdruckes auf einem Bereich von bis 5 bar einzustellen. Dies wird insbesondere mit Hilfe des Ventils V7 bewirkt.

Auch wenn in der Darstellung gemäß Fig. 1 eine einzige Druckregelung 91 vorgesehen ist, mit welcher u.a. die Betätigungsdrücke der als Quetschventil ausgeführten Pulvereinlass- und Pulverauslassventile 7, 8 geregelt werden, ist es selbstverständlich auch denkbar, dass für jedes Quetschventil 7, 8 eine eigene Druckregelung vorgesehen ist.

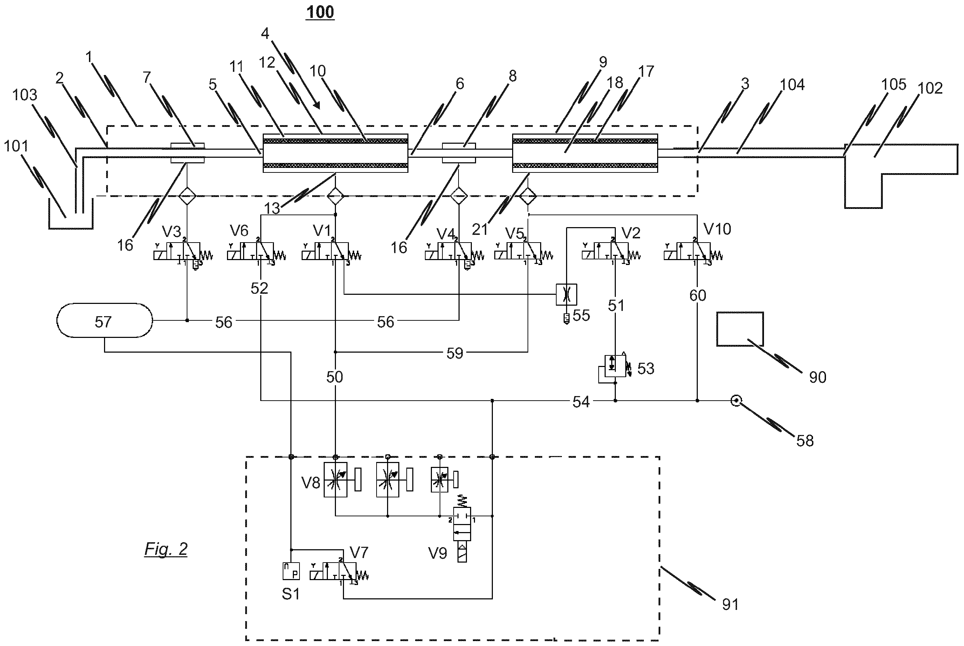

Die in Fig. 2 schematisch dargestellte exemplarische Ausführungsform der erfindungsgemäßen Pulverfördervorrichtung 100 entspricht im Wesentlichen der zuvor unter Bezugnahme auf die Darstellung in Fig. 1 beschriebenen Ausführungsform, wobei hier jedoch noch eine erste Bypass-Druckluftleitung vorgesehen ist, welche einerseits (über die Druckluftleitung 54) mit der Druckluftversorgung bzw. Druckluftquelle 58 verbunden und andererseits über ein weiteres Ventil V6 (hier: Magnetventil) mit der Luftaustauschöffnung 13 der Pulverdichtstrompumpe 1 verbindbar ist. Diese Bypass-Druckluftleitung dient bei der in Fig. 2 dargestellten Ausführungsform dazu, im Spül-Betriebsmodus der Pulverdichtstrompumpe 1 die Luftaustauschöffnung 13 der Pulverdichtstrompumpe 1 direkt strömungsmäßig mit der Druckluftquelle 58 zu verbinden, um die von der Druckluftquelle 58 bereitgestellte Druckluft direkt in die Förderkammer 4 der Pulverdichtstrompumpe 1 einzuleiten.

Des Weiteren ist eine zweite Bypass-Druckluftleitung 60 vorgesehen, welche einerseits mit der Druckluftversorgung bzw. Druckluftquelle 58 verbunden und andererseits über ein weiteres Ventil V10 (hier: Magnetventil) mit der Luftaustauschöffnung 21 der Zusatzdruckluft-Einlassvorrichtung 9 verbindbar ist. Diese Bypass-Druckluftleitung 60 dient bei der in Fig. 2 dargestellten Ausführungsform dazu, im Spül-Betriebsmodus der Pulverdichtstrompumpe 1 die Luftaustauschöffnung 21 der Zusatzdruckluft-Einlassvorrichtung 9 direkt strömungsmäßig mit der Druckluftquelle 58 zu verbinden, um die von der Druckluftquelle 58 bereitgestellte Druckluft direkt in die Zusatzdruckluft-Einlassvorrichtung 9 einzuleiten.

Bei dieser alternativen Ausführungsform wird nur im Pulverförder-Betriebsmodus der Pulverdichtstrompumpe 1 über das Drosselventil V8 der Betriebsdruck der von der Druckluftquelle 58 bereitgestellten Druckluft reduziert.

Wie bereits angedeutet, kommt bei der erfindungsgemäßen Lösung als Drosseleinrichtung der Druckregelung 91 das Drosselventil V8 zum Einsatz. Dieses Drosselventil V8 ist vorzugsweise derart ausgebildet, um bedarfsweise einen Durchflussquerschnitt der mit der Förderkammer 4 der Pulverdichtstrompumpe 1 strömungsmäßig verbundenen oder verbindbaren Druckgasleitung 50 örtlich einzustellen, um auf diese Weise die pro Zeiteinheit der Förderkammer 4 zugeführte Menge an Druckgas und/oder den Druckwert des an die Luftaustauschöffnung 13 anzulegenden Betätigungsdruckes zu variieren bzw. an den jeweiligen Betriebsmodus der Pulverdichtstrompumpe 1 anzupassen.

Gemäß einer bevorzugten Realisierung der bei der erfindungsgemäßen Pulverfördervorrichtung 100 zum Einsatz kommenden Drosseleinrichtung ist das Drosselventil V8 in Gestalt eines Regeventils ausgeführt, wobei das Drosselventil V8 zum Einstellen des Druckwertes des während der Pulverförder-Betriebsmodus in die Förderkammer 4 einzuleitenden Transport-Druckgases und/oder zum Einstellen einer pro Zeiteinheit während des Pulverförder-Betriebsmodus in die Förderkammer 4 einzuleitenden Menge an Transport-Druckgas dient. Hierbei ist es von Vorteil, wenn das mindestens eine Drosselventil V8 ferner ausgebildet ist, zum Einstellen des Druckwertes des während des Spül-Betriebsmodus in die Förderkammer 4 einzuleitenden Spül-Druckgases und/oder zum Einstellen einer pro Zeiteinheit während des Spül-Betriebsmodus in die Förderkammer 4 einzuleitenden Menge an Spül-Druckgas.

In diesem Zusammenhang ist es denkbar, dass das Drosselventil V8 ein ortsfestes Ventil, insbesondere Ventilsitz, und ein relativ dazu bewegliches und dadurch einstellbares Ventilteil, insbesondere Ventilnadel, zur Veränderung der Öffnungsweite eines Drosselkanals des Drosselventils V8 aufweist, wobei die geometrische Form des einstellbaren Ventilteils (Ventilnadel) so gewählt ist, dass das Drosselventil V8 eine Durchflusskennlinie mit mindestens zwei im Wesentlichen linearen Bereichen aufweist. Diese mindestens im Wesentlichen linearen Bereiche der Durchflusskennlinie weisen dabei unterschiedliche Steigungen auf.

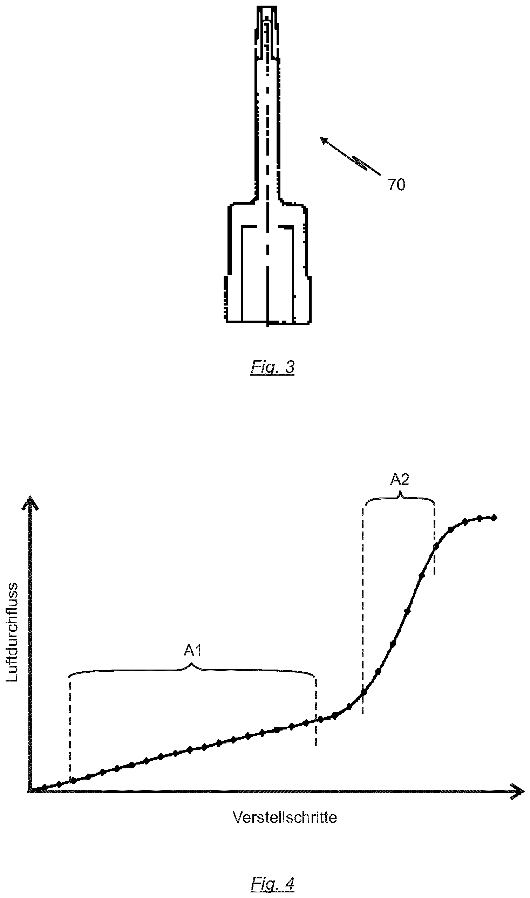

In diesem Zusammenhang wird auf die Darstellung in Fig. 3 verwiesen, wo eine beispielhafte Ausführungsform eines Ventilnadelkopfes 70 eines Ventilteils dargestellt ist, welches relativ zu einem Ventilsitz des Drosselventils V8 (nicht dargestellt) verstellbar ist, um dadurch die Öffnungsweite eines im Ventilsitz gebildeten Drosselkanals einzustellen. Wesentlich ist, dass der in Fig. 2 exemplarisch dargestellte Ventilnadelkopf 70 geometrisch so ausgeführt ist, dass eine Durchflusskennlinie mit zwei im Wesentlichen linearen Bereichen realisierbar ist, wobei diese beiden linearen Bereiche unterschiedliche Steigungen aufweisen.

Erläuternd hierzu wird auf die Darstellung in Fig. 4 verwiesen, welche eine exemplarische Durchflusskennlinie eines Drosselventils V8 zeigt, bei der ein Ventilnadelkopf 70 gemäß der Darstellung in Fig. 2 zum Einsatz kommt. Anhand in Fig. 4 gezeigten Durchflusskennlinie ist deutlich erkennbar, dass diese zwei im wesentlichen lineare Bereiche A1, A2 aufweist, wobei diese beiden im wesentlichen linearen Bereiche A1, A2 deutlich unterschiedliche Steigungen aufweisen.

Die Steuereinrichtung 90 ist gemäß der vorliegenden Erfindung vorzugsweise derart ausgebildet, im Pulverförder-Betriebsmodus der Pulverdichtstrompumpe 1 das Drosselventil V8 derart anzusteuern, dass der Druckgas-Durchfluss durch das Drosselventil V8 in dem ersten im Wesentlichen linearen Bereich A1 der Durchflusskennlinie liegt, wobei das Drosselventil V8 von der Steuereinrichtung 90 im Spül-Betriebsmodus der Pulverdichtstrompumpe 1 derart angesteuert wird, dass der Druckgas-Durchfluss durch das Drosselventil V8 in dem zweiten im Wesentlichen linearen Bereich A2 der Durchflusskennlinie liegt. Auf diese Weise ist es möglich, mit einem einzigen Ventil (Drosselventil V8) zwei unterschiedliche Druckniveaus für das in die Förderkammer 4 der Pulverdichtstrompumpe 1 einzuleitenden Druckgas zu realisieren, so dass auf das in dem Pneumatikdiagramm gemäß Fig. 2 zum Einsatz kommende Ventil V6, welches beispielsweise als Magnetventil ausgeführt ist verzichtet werden kann.

Vorzugsweise ist das Drosselventil V8 über einen von der Steuereinrichtung 90 ansteuerbaren Stellantrieb, insbesondere elektrischen Stellantrieb ansteuerbar, um den Durchfluss von Druckgas durch das Drosselventil V8 durch ein Verfahren des beweglichen Ventilteils (Ventilnadelkopf 70) relativ zu dem ortsfesten Ventilteil (Ventilsitz) einzustellen.

Die Erfindung ist nicht auf die in den Zeichnungen exemplarisch dargestellten Ausführungsformen beschränkt, sondern ergibt sich aus einer Zusammenschau sämtlicher hierin offenbarter Merkmale.

Insbesondere ist es in diesem Zusammenhang denkbar, dass die Drosseleinrichtung der Druckregelung 91 kein Drosselventil V8 der zuvor beschriebenen Ausführungsform, sondern eine verstellbare Drosselklappe aufweist, welche über die Steuereinrichtung 90 derart ansteuerbar ist, dass diese in mindestens zwei vorab festgelegten oder festlegbaren Stellungen überführbar ist, wobei jede vorab festgelegte oder festlegbare Stellung der Drosselklappe einer durch die Drosseleinrichtung passierbaren, definierten Durchflussmenge an Druckgas entspricht.

## Patentansprüche

1. Verfahren zum wahlweisen Betreiben einer Pulverdichtstrompumpe (1) in einem Pulverförder-Betriebsmodus oder einem Spül-Betriebsmodus, wobei die Pulverdichtstrompumpe (1) mindestens eine Förderkammer (4) mit einem Pulvereinlassventil (7) und einem Pulverauslassventil (8) aufweist, und
wobei das Pulvereinlassventil (7) und das Pulverauslassventil (8) jeweils als ein pneumatisch betätigbares Quetschventil ausgeführt sind, welches bei Anlegen eines Betätigungsdruckes verschließbar ist, wobei eine Druckregelung (91) mit einem Steuerventil (V7) und einem Drucksensor (S1) vorgesehen ist, wobei das Pulvereinlassventil (7) und/oder das Pulverauslassventil (8) strömungsmässig mit einer Druckluftquelle (59) verbindbar sind/ist,
wobei mit dem Drucksensor (S1) das Druckniveau der Betätigungsluft für das Pulvereinlassventil (7) und /oder das Pulverauslassventil erfasst wird,
wobei in dem Pulverförder-Betriebsmodus der Pulverdichtstrompumpe (1) über das Steuerventil (V7) der Druckwert der Betätigungsluft derart auf ein erstes Druckniveau eingestellt wird, welches genügt, um das als Quetschventil ausgebildete Pulvereinlassventil (7) bzw. das als Quetschventil ausgebildete Pulverauslassventil (8) im Pulverförder-Betriebsmodus gasdicht verschliessen zu können, und wobei in dem Spül-Betriebsmodus der Pulverdichtstrompumpe (1) über das Steuerventil (V7) der Druckwert der Betätigungsluft derart auf ein zweites Druckniveau eingestellt wird, welches genügt, um das als Quetschventil ausgebildete Pulvereinlassventil (7) bzw. das als Quetschventil ausgebildete Pulverauslassventil (8) im Spül-Betriebsmodus gasdicht verschliessen zu können, wobei das zweite Druckniveau höher als das erste Druckniveau ist, und wobei der Druckwert des zum Verschließen des Pulvereinlassventils (7) und/oder Pulverauslassventils (8) gewählten Betätigungsdruckes eingestellt wird, und zwar:
- in Abhängigkeit von dem jeweiligen Betriebsmodus der Pulverdichtstrompumpe (1);
- in Abhängigkeit von einem in der Förderkammer (4) herrschenden Druck;
- in Abhängigkeit einer im Pulverförder-Betriebsmodus der Förderkammer (4) pro Zeiteinheit zugeführten Menge an Transport-Druckgas; und/oder
- in Abhängigkeit einer im Pulverförder-Betriebsmodus von der Pulverdichtstrompumpe (1) pro Zeiteinheit geförderten Menge an Beschichtungspulver.

2. Verfahren nach Anspruch 1,
wobei in Abhängigkeit von dem Betriebsmodus der Pulverdichtstrompumpe (1) der Druckwert eines in die Förderkammer (4) einzuleitenden Druckgases und/oder die Menge eines pro Zeiteinheit in die Förderkammer (4) einzuleitenden Druckgases eingestellt werden/wird.

3. Verfahren nach Anspruch 1 oder 2,
wobei in dem Pulverförder-Betriebsmodus abwechselnd durch das geöffnete Pulvereinlassventil (7) eine Pulverportion in die Förderkammer (4) eingesaugt wird, während das Pulverauslassventil (8) geschlossen ist, und durch das geöffnete Pulverauslassventil (8) die zuvor in die Förderkammer (4) eingesaugte Pulverportion durch Einleiten von Transport-Druckgas in die Förderkammer (4) abgegeben wird, während das Pulvereinlassventil (7) geschlossen ist.

4. Verfahren nach einem der Ansprüche 1 bis 3,
wobei in dem Spül-Betriebsmodus entweder das Pulvereinlassventil (7) oder das Pulverauslassventil (8) geöffnet ist, während das andere der beiden Ventile geschlossen ist, und wobei gleichzeitig oder zeitlich verzögert Spül-Druckgas in die Förderkammer (4) eingeleitet wird.

5. Verfahren nach einem der Ansprüche 1 bis 4,
wobei das Pulvereinlassventil (7) und das Pulverauslassventil (8) jeweils als Quetschventil ausgeführt sind, und zwar von der Art, bei welcher ein flexibler Schlauch einen Ventilkanal auf der Schlauchinnenseite von einer dem Quetschventil zugeordneten Druckkammer auf der Schlauchaußenseite trennt, wobei der Schlauch durch den Betätigungsdruck von in die Drucckammer eingeleitetem Betätigungs-Druckgas zusammenquetschbar und dadurch der Ventilkanal schließbar ist.

6. Verfahren nach einem der Ansprüche 1 bis 5,
wobei wiederholt der folgende Betriebszyklus a) bis d) während des Pulverförder-Betriebsmodus durchgeführt wird:
a) Erzeugen eines Unterdruckes in der Förderkammer (4) zum Einsaugen einer Pulverportion in die Förderkammer (4) durch das geöffnete Pulvereinlassventil (7), während das Pulverauslassventil (8) geschlossen ist;
b) Verschließen des Pulvereinlassventils (7) und Öffnen des Pulverauslassventils (8);
c) Einleiten von Transport-Druckgas in die Förderkammer (4) zum Abgeben der in Schritt a) eingesaugten Pulverportion aus der Förderkammer (4) durch das geöffnete Pulverauslassventil (8), während das Pulvereinlassventil (7) geschlossen ist; und
d) Verschließen des Pulverauslassventils (8) und Öffnen des Pulvereinlassventils (7).

7. Verfahren nach Anspruch 6,
wobei der Druckwert des zum Verschließen des Pulvereinlassventils (7) und/oder Pulverauslassventils (8) gewählten Betätigungsdruckes an die im Verfahrensschritt c) pro Zeiteinheit in die Förderkammer (4) eingeleitete Menge an Transport-Druckglas eingestellt wird.

8. Verfahren nach einem der Ansprüche 1 bis 7,
wobei der folgende Betriebszyklus i) und ii) während des Spül-Betriebsmodus durchgeführt wird:
i) Verschließen des Pulverauslassventils (8) und Öffnen des Pulvereinlassventils (7); und
ii) Einleiten von Spül-Druckgas in die Förderkammer (4) zum Spülen der Förderkammer (4) und der Ansaugseite der Pulverdichtstrompumpe (1);
und wobei der folgende Betriebszyklus iii) und iv) während des Spül-Betriebsmodus durchgeführt wird:
iii) Verschließen des Pulvereinlassventils (7) und Öffnen des Pulverauslassventils (8); und
iv) Einleiten von Spül-Druckgas in die Förderkammer (4) zum Spülen der Förderkammer (4) und der Pulverabgabeseite der Pulverdichtstrompumpe (1),
wobei der Betriebszyklus i) und ii) und der Betriebszyklus ii) und iv) vorzugsweise zeitlich versetzt durchgeführt werden.

9. Verfahren nach einem der Ansprüche 1 bis 8,
wobei das Verfahren ferner folgende Verfahrensschritte aufweist:
- ein Druckwert eines während des Pulverförder-Betriebsmodus in die Förderkammer (4) einzuleitenden Transport-Druckgases wird eingestellt; und/oder
- eine pro Zeiteinheit während des Pulverförder-Betriebsmodus der Förderkammer (4) zuzuführenden Menge an Transport-Druckgas wird eingestellt; und/oder
- der Druckwert eines während des Spül-Betriebsmodus in die Förderkammer (4) einzuleitenden Spül-Druckgases wird eingestellt; und/oder
- eine pro Zeiteinheit während des Spül-Betriebsmodus der Förderkammer (4) zuzuführenden Menge an Spül-Druckgas wird eingestellt; und/oder
- der Druckwert des während des Pulverförder-Betriebsmodus an dem Pulvereinlassventil (7) und/oder Pulverauslassventil (8) anzulegenden Betätigungsdruckes wird eingestellt; und/oder
- der Druckwertes des während des Spül-Betriebsmodus an dem Pulvereinlassventil (7) und/oder Pulverauslassventil (8) anzulegenden Betätigungsdruckes wird eingestellt.

10. Verfahren nach Anspruch 9,
wobei im Pulverförder-Betriebsmodus der Druckwert des in die Förderkammer (4) einzuleitenden Transport-Druckgases so eingestellt wird, dass dieser in einem Bereich bis maximal 5 bar liegt; und/oder wobei im Pulverförder-Betriebsmodus die pro Zeiteinheit der Förderkammer (4) zuzuführende Menge an Transport-Druckgas auf einen Wert von 0,2 bis 4,0 m³/h eingestellt wird; und/oder
wobei im Spül-Betriebsmodus der Druckwert des in die Förderkammer (4) einzuleitenden Spül-Druckgases so eingestellt wird, dass dieser in einem Bereich zwischen 4 bis 10 bar liegt; und/oder
wobei im Spül-Betriebsmodus die pro Zeiteinheit der Förderkammer (4) zuzuführende Menge an Spül-Druckgas auf einen Wert von 5,0 bis 25,0 m³/h eingestellt wird; und/oder
wobei im Pulverförder-Betriebsmodus der Druckwert des an das Pulvereinlassventil (7) und/oder Pulverauslassventil (8) anzulegenden Betätigungsdruckes auf bis maximal 3 bar eingestellt wird; und/oder wobei im Spül-Betriebsmodus der Druckwert des an das Pulvereinlassventil (7) und/oder Pulverauslassventil (8) anzulegenden Betätigungsdruckes bis maximal 5 bar, insbesondere auf einem Bereich von 2 bis 5 bar eingestellt wird; und/oder
wobei zur Druckregelung örtlich ein Durchflussquerschnitt einer mit der Förderkammer (4) strömungsmäßig verbundenen oder verbindbaren Druckgasleitung eingestellt wird.

11. Pulverfördervorrichtung (100), insbesondere für Beschichtungspulver, wobei die Pulverfördervorrichtung (100) folgendes aufweist:
- eine Pulverdichtstrompumpe (1), welche mindestens eine Förderkammer (4) mit einem Pulvereinlassventil (7) und einem Pulverauslassventil (8) aufweist; und
- eine Steuereinrichtung (90) zum wahlweisen Betreiben der Pulverdichtstrompumpe (1) in einem Pulverförder-Betriebsmodus oder einem Spül-Betriebsmodus gemäß einem Verfahren nach einem der Ansprüche 1 bis 10,
wobei das Pulvereinlassventil (7) und das Pulverauslassventil (8) jeweils als ein pneumatisch betätigbares Quetschventil ausgeführt sind, welches bei Anlegen eines Betätigungsdruckes verschließbar ist,
wobei eine Druckregelung (91) mit einem Steuerventil (V7) und einem Drucksensor (S1) vorgesehen ist, wobei das Pulvereinlassventil (7) und/oder das Pulverauslassventil (8) strömungsmäßig mit einer Druckluftquelle (58) verbindbar sind/ist, wobei mit dem Drucksensor (S1) das Druckniveau der Betätigungsluft für das Pulvereinlassventil (7) und/oder das Pulverauslassventil erfasst wird,
wobei in dem Pulverförder-Betriebsmodus der Pulverdichtstrompumpe (1) über das Steuerventil (V7) der Druckwert der Betätigungsluft derart auf ein erstes Druckniveau eingestellt wird, welches genügt, um das als Quetschventil ausgebildete Pulvereinlassventil (7) bzw. das als Quetschventil ausgebildete Pulverauslassventil (8) im Pulverförder-Betriebsmodus gasdicht verschließen zu können, und
wobei in dem Spül-Betriebsmodus der Pulverdichtstrompumpe (1) über das Steuerventil (V7) der Druckwert der Betätigungsluft derart auf ein zweites Druckniveau eingestellt wird, welches genügt, um das als Quetschventil ausgebildete Pulvereinlassventil (7) bzw. das als Quetschventil ausgebildete Pulverauslassventil (8) im Spül-Betriebsmodus gasdicht verschließen zu können, wobei das zweite Druckniveau höher als das erste Druckniveau ist.

12. Pulverfördervorrichtung (100) nach Anspruch 11,
wobei die Pulverfördervorrichtung (100) ferner eine Druckregelung (91) mit mindestens einer Drosseleinrichtung aufweist zum örtlichen Einstellen eines Durchflussquerschnittes einer mit der Förderkammer (4) strömungsmäßig verbundenen oder verbindbaren Druckgasleitung.

13. Pulverfördervorrichtung (100) nach Anspruch 12,
wobei die Drosseleinrichtung mindestens ein Drosselventil (V8), insbesondere in Gestalt eines Regelventils, aufweist, welches ausgebildet ist zum Einstellen eines Druckwertes des während des Pulverförder-Betriebsmodus in die Förderkammer (4) einzuleitenden Transport-Druckgases und/oder zum Einstellen einer pro Zeiteinheit während des Pulverförder-Betriebsmodus in die Förderkammer (4) einzuleitenden Menge an Transport-Druckgas.

14. Pulverfördervorrichtung (100) nach Anspruch 13,
wobei das Drosselventil (V8) ein ortsfestes Ventilteil, insbesondere in Gestalt eines Ventilsitzes, und ein relativ dazu bewegliches und dadurch einstellbares Ventilteil (70) zur Veränderung der Öffnungsweite eines Drosselkanals des mindestens einen Drosselventil (V8) aufweist, wobei die geometrische Form des einstellbaren Ventilteils (70) so gewählt ist, dass das Drosselventil (V8) eine Durchflusskennlinie mit mindestens zwei im Wesentlichen linearen Bereich (A1, A2) aufweist, wobei die mindestens zwei im wesentlichen linearen Bereiche (A1, A2) der Durchflusskennlinie vorab festgelegte und unterschiedliche Steigungen aufweisen; und/oder wobei dem mindestens einen Drosselventil (V8) ferner ein von der Steuereinrichtung (90) ansteuerbarer Stellantrieb, insbesondere elektrischer Stellantrieb, zugeordnet ist zum Einstellen des Durchflusses von Druckgas durch das Drosselventil (V8) durch ein Verfahren des beweglichen Ventilteils (70) relativ zu dem ortsfesten Ventilteil.

15. Pulverfördervorrichtung (100) nach einem der Ansprüche 12 bis 14,
wobei die Drosseleinrichtung eine verstellbare Drosselklappe aufweist, welche über die Steuereinrichtung (90) derart ansteuerbar ist, dass diese in mindestens zwei vorab festgelegten oder festlegbaren Stellungen überführbar ist, wobei jede vorab festgelegte oder festlegbare Stellung der Drosselklappe einer durch die Drosseleinrichtung passierbaren, definierten Durchflussmenge an Druckgas entspricht.

## Claims

1. A method for selectively operating a dense phase powder pump (1) in a powder conveying operating mode or a flushing operating mode, wherein the dense phase powder pump (1) comprises at least one conveying chamber (4) having a powder inlet valve (7) and a powder outlet valve (8), and
wherein the powder inlet valve (7) and the powder outlet valve (8) are each configured as a pneumatically actuable pinch valve able to be closed upon application of an actuating pressure,
wherein a pressure regulator (91) having a control valve (V7) and a pressure sensor (S1) is provided, wherein the powder inlet valve (7) and/or the powder outlet valve (8) is/are fluidically connectable to a compressed air source (59), wherein the pressure sensor (S1) detects the pressure level of the actuating air for the powder inlet valve (7) and/or the powder outlet valve,
wherein in the powder conveying operating mode of the dense phase powder pump (1), the pressure value of the actuating air is set to a first pressure level by the control valve (V7) which is sufficient enough to be able to close the powder inlet valve (7) configured as a pinch valve or respectively the powder outlet valve (8) configured as a pinch valve in gas-tight manner during the powder conveying operating mode, and wherein in the flushing operating mode of the dense phase powder pump (1), the pressure value of the actuating air is set to a second pressure level by the control valve (V7) which is sufficient enough to be able to close the powder inlet valve (7) configured as a pinch valve or respectively the powder outlet valve (8) configured as a pinch valve in gas-tight manner during the flushing operating mode,
wherein the second pressure level is higher than the first pressure level, and wherein the pressure value of the actuating pressure selected to close the powder inlet valve (7) and/or powder outlet valve (8) is regulated, and namely:
- as a function of the respective operating mode of the dense phase powder pump (1);
- as a function of a pressure prevailing within the conveying chamber (4);
- as a function of an amount of compressed carrier gas supplied to the conveying chamber (4) per unit of time in the powder conveying operating mode; and/or
- as a function of an amount of coating powder conveyed by the dense phase powder pump (1) per unit of time in the powder conveying operating mode.

2. The method according to claim 1,
wherein the pressure value of a compressed gas to be introduced into the conveying chamber (4) and/or the amount of the compressed gas to be introduced into the conveying chamber (4) per unit of time is set as a function of the operating mode of the dense phase powder pump (1).

3. The method according to claim 1 or 2,
wherein a portion of powder is alternatingly sucked into the conveying chamber (4) through the opened powder inlet valve (7) during the powder conveying operating mode while the powder outlet valve (8) is closed, and the portion of powder previously sucked into the conveying chamber (4) is discharged through the open powder outlet valve (8) by introducing the compressed carrier gas into the conveying chamber (4) while the powder inlet valve (7) is closed.

4. The method according to one of claims 1 to 3,
wherein either the powder inlet valve (7) or the powder outlet valve (8) is open during the flushing operating mode while the other of the two valves is closed, and wherein compressed flushing gas is introduced into the conveying chamber (4) simultaneously or after a delay.

5. The method according to one of claims 1 to 4,
wherein the powder inlet valve (7) and the powder outlet valve (8) are each configured as a pinch valve, and of the type in which a flexible hose separates a valve channel on the inside of the hose from a pressure chamber associated with the pinch valve on the outside of the hose, wherein the actuating pressure from the compressed actuating gas introduced into the pressure chamber can squeeze the hose and the valve channel can thereby be closed.

6. The method according to one of claims 1 to 5,
wherein the following operating cycle a) to d) is repeated during the powder conveying operating mode:
a) generating a negative pressure in the conveying chamber (4) to suck a portion of powder into the conveying chamber (4) through the opened powder inlet valve (7) while the powder outlet valve (8) is closed;
b) closing the powder inlet valve (7) and opening the powder outlet valve (8);
c) introducing the compressed carrier gas into the conveying chamber (4) to discharge the portion of powder sucked in during step a) out of the conveying chamber (4) through the open powder outlet valve (8) while the powder inlet valve (7) is closed; and
d) closing the powder outlet valve (8) and opening the powder inlet valve (7).

7. The method according to claim 6,
wherein the pressure value of the actuating pressure selected for closing the powder inlet valve (7) and/or powder outlet valve (8) is set to the amount of compressed carrier gas introduced into the conveying chamber (4) per unit of time in method step c).

8. The method according to one of claims 1 to 7,
wherein the following operating cycle i) and ii) is implemented during the flushing operating mode:
i) closing the powder outlet valve (8) and opening the powder inlet valve (7); and
ii) introducing compressed flushing gas into the conveying chamber (4) for flushing the conveying chamber (4) and the inlet side of the dense phase powder pump (1);
and wherein the following operating cycle iii) and iv) is implemented during the flushing operating mode:
iii) closing the powder inlet valve (7) and opening the powder outlet valve (8); and
iv) introducing compressed flushing gas into the conveying chamber (4) for flushing the conveying chamber (4) and the powder discharge side of the dense phase powder pump (1);
wherein operating cycle i) and ii) and operating cycle ii) and iv) are preferably implemented at different times.

9. The method according to one of claims 1 to 8,
wherein the method further comprises the following method steps:
- setting the pressure value of the compressed carrier gas to be introduced into the conveying chamber (4) during the powder conveying operating mode; and/or
- setting an amount of compressed carrier gas to be supplied to the conveying chamber (4) per unit of time during the powder conveying operating mode; and/or
- setting the pressure value of a compressed flushing gas to be introduced into the conveying chamber (4) during the flushing operating mode; and/or
- setting an amount of compressed flushing gas to be supplied to the conveying chamber (4) per unit of time during the flushing operating mode; and/or
- setting the pressure value of the actuating pressure to be applied on the powder inlet valve (7) and/or powder outlet valve (8) during the powder conveying operating mode; and/or
- setting the pressure value of the actuating pressure to be applied on the powder inlet valve (7) and/or powder outlet valve (8) during the flushing operating mode.

10. The method according to claim 9,
wherein the pressure value of the compressed carrier gas to be introduced into the conveying chamber (4) during the powder conveying operating mode is set so as to be in a range of up to a maximum of 5 bar; and/or
wherein the amount of compressed carrier gas to be supplied to the conveying chamber (4) per unit of time during the powder conveying operating mode is set to a value of 0.2 to 4.0 m³/h; and/or
wherein the pressure value of the compressed carrier gas to be introduced into the conveying chamber (4) during the flushing operating mode is set so as to be in a range of between 4 to 10 bar; and/or
wherein the amount of compressed flushing gas to be supplied to the conveying chamber (4) per unit of time during the flushing operating mode is set to a value of 5.0 to 25.0 m³/h; and/or
wherein the pressure value of the actuating pressure to be applied on the powder inlet valve (7) and/or powder outlet valve (8) during the powder conveying operating mode is set to a maximum of 3 bar; and/or
wherein the pressure value of the actuating pressure to be applied on the powder inlet valve (7) and/or powder outlet valve (8) during the flushing operating mode is set to a maximum of 5 bar, in particular to a range of between 2 and 5 bar; and/or
wherein a cross-sectional area of flow of a compressed gas line fluidically connected or connectable to the conveying chamber (4) is set so as to regulate pressure on a localized basis.

11. A powder conveyor (100), in particular for coating powder, wherein the powder conveyor (100) comprises the following:
- a dense phase powder pump (1) comprising at least one conveying chamber (4) having a powder inlet valve (7) and a powder outlet valve (8); and
- a control device (90) for selectively operating the dense phase powder pump (1) in a powder conveying operating mode or a flushing operating mode according to a method pursuant to one of claims 1 to 10,
wherein the powder inlet valve (7) and the powder outlet valve (8) are each configured as a pneumatically operating pinch valve able to be closed upon application of an actuating pressure,
wherein a pressure regulator (91) having a control valve (V7) and a pressure sensor (S1) is provided, wherein the powder inlet valve (7) and/or the powder outlet valve (8) is/are fluidically connectable to a compressed air source (59), wherein the pressure sensor (S1) detects the pressure level of the actuating air for the powder inlet valve (7) and/or the powder outlet valve,
wherein in the powder conveying operating mode of the dense phase powder pump (1), the pressure value of the actuating air is set to a first pressure level by the control valve (V7) which is sufficient enough to be able to close the powder inlet valve (7) configured as a pinch valve or respectively the powder outlet valve (8) configured as a pinch valve in gas-tight manner during the powder conveying operating mode, and wherein in the flushing operating mode of the dense phase powder pump (1), the pressure value of the actuating air is set to a second pressure level by the control valve (V7) which is sufficient enough to be able to close the powder inlet valve (7) configured as a pinch valve or respectively the powder outlet valve (8) configured as a pinch valve in gas-tight manner during the flushing operating mode, wherein the second pressure level is higher than the first pressure level.

12. The powder conveyor (100) according to claim 11,
wherein the powder conveyor (100) further comprises a pressure regulator (91) having at least one throttle device for setting a cross-sectional area of flow of a compressed gas line fluidically connected or connectable to the conveying chamber (4) on a localized basis.

13. The powder conveyor (100) according to claim 12,
wherein the throttle device comprises at least one throttle valve (V8), in particular in the form of a regulating valve, which is designed to set a pressure value for the compressed carrier gas to be introduced into the conveying chamber (4) during the powder conveying operating mode and/or to set an amount of compressed carrier gas to be introduced into the conveying chamber (4) per unit of time during the powder conveying operating mode.

14. The powder conveyor (100) according to claim 13,
wherein the throttle valve (V8) comprises a fixed valve part, in particular in the form of a valve seat, and a valve part (70) which is movable relative thereto and can thereby be regulated to change an opening width of a throttle channel of the at least one throttle valve (V8), wherein the geometrical form of the adjustable valve part (70) is selected such that the throttle valve (V8) exhibits a flow characteristic having at least two substantially linear ranges (A1, A2), wherein the at least two substantially linear ranges (A1, A2) of the flow characteristic exhibit predefined and different gradients and/or
wherein the at least one throttle valve (V8) is further allocated an actuator, in particular an electric actuator, controllable by the control device (90) for regulating the flow rate of compressed gas through said throttle valve (V8) by moving the movable valve part (70) relative to the fixed valve part.

15. The powder conveyor (100) according to one of claims 12 to 14,
wherein the throttle device comprises an adjustable butterfly valve which is controllable by the control device (90) such that it can be conveyed into at least two predefined or definable positions, wherein each predefined or definable position of the butterfly valve corresponds to a defined rate of compressed gas flow able to pass through the throttle device.

## Revendications

1. Procédé pour faire fonctionner une pompe à poudre en phase dense (1) au choix dans un mode de fonctionnement de convoyage de poudre ou dans un mode de fonctionnement de rinçage, la pompe à poudre en phase dense (1) comprenant au moins une chambre de convoyage (4) pourvue d'une vanne d'entrée de poudre (7) et d'une vanne de sortie de poudre (8), et
la vanne d'entrée de poudre (7) et la vanne de sortie de poudre (8) sont réalisées chacune sous la forme d'une vanne à écrasement à actionnement pneumatique qui est refermable lorsqu'une pression d'actionnement est appliquée,
dans lequel
il est prévu une régulation de pression (91) pourvue d'une vanne de commande (V7) et d'un capteur de pression (S1),
la vanne d'entrée de poudre (7) et/ou la vanne de sortie de poudre (8) est/sont susceptible(s) d'être reliée(s) en termes d'écoulement à une source d'air comprimé (59),
le capteur de pression (S1) détecte le niveau de pression de l'air d'actionnement pour la vanne d'entrée de poudre (7) et/ou la vanne de sortie de poudre,
dans le mode de fonctionnement de convoyage de poudre de la pompe à poudre en phase dense (1), la valeur de la pression de l'air d'actionnement est ainsi réglée par la vanne de commande (V7) à un premier niveau de pression qui suffit pour pouvoir fermer de façon étanche aux gaz, en mode de fonctionnement de convoyage de poudre, la vanne d'entrée de poudre (7) réalisée sous forme de vanne à écrasement ou la vanne de sortie de poudre (8) réalisée sous forme de vanne à écrasement, et
dans le mode de fonctionnement de rinçage de la pompe à poudre en phase dense (1), la valeur de la pression de l'air d'actionnement est ainsi réglée par la vanne de commande (V7) à un second niveau de pression qui suffit pour pouvoir fermer de façon étanche aux gaz, en mode de fonctionnement de rinçage, la vanne d'entrée de poudre (7) réalisée sous forme de vanne à écrasement ou la vanne de sortie de poudre (8) réalisée sous forme de vanne à écrasement, le second niveau de pression étant supérieur au premier niveau de pression, et
la valeur de la pression d'actionnement choisie pour fermer la vanne d'entrée de poudre (7) et/ou la vanne de sortie de poudre (8) est réglée
- en fonction du mode de fonctionnement respectif de la pompe à poudre en phase dense (1) ;
- en fonction d'une pression régnant dans la chambre de convoyage (4) ;
- en fonction d'une quantité de gaz comprimé de transport amenée par unité de temps à la chambre de convoyage (4), en mode de fonctionnement de convoyage de poudre ;
et/ou
- en fonction d'une quantité de poudre de revêtement convoyée par unité de temps par la pompe à poudre en phase dense (1), en mode de fonctionnement de convoyage de poudre.

2. Procédé selon la revendication 1,
dans lequel
la valeur de la pression d'un gaz comprimé à injecter dans la chambre de convoyage (4) et/ou la quantité d'un gaz comprimé à injectée par unité de temps dans la chambre de convoyage (4) est/sont réglée(s) en fonction du mode de fonctionnement de la pompe à poudre en phase dense (1).

3. Procédé selon la revendication 1 ou 2,
dans lequel
en mode de fonctionnement de convoyage de poudre, une portion de poudre est aspirée en alternance dans la chambre de convoyage (4) à travers la vanne d'entrée de poudre (7) ouverte, alors que la vanne de sortie de poudre (8) est fermée, et la portion de poudre aspirée auparavant dans la chambre de convoyage (4) est distribuée à travers la vanne de sortie de poudre (8) ouverte par injection de gaz comprimé de transport dans la chambre de convoyage (4), alors que la vanne d'entrée de poudre (7) est fermée.

4. Procédé selon l'une des revendications 1 à 3,
dans lequel
en mode de fonctionnement de rinçage, soit la vanne d'entrée de poudre (7) soit la vanne de sortie de poudre (8) est ouverte, alors que l'autre des deux vannes est fermée, et simultanément ou de façon retardée dans le temps, du gaz comprimé de rinçage est injecté dans la chambre de convoyage (4).

5. Procédé selon l'une des revendications 1 à 4,
dans lequel
la vanne d'entrée de poudre (7) et la vanne de sortie de poudre (8) sont réalisées chacune sous forme de vanne à écrasement de type dans lequel un tuyau flexible sépare un canal de vanne sur le côté intérieur du tuyau vis-à-vis d'une chambre de compression associée à la vanne à écrasement du côté extérieur du tuyau, le tuyau pouvant être écrasé par la pression d'actionnement du gaz comprimé d'actionnement injecté dans la chambre de compression, moyennant quoi le canal de vanne est refermable.

6. Procédé selon l'une des revendications 1 à 5,
dans lequel
le cycle de fonctionnement suivant a) à d) est répété pendant le mode de fonctionnement de convoyage de poudre :
a) générer une dépression dans la chambre de convoyage (4) pour aspirer une portion de poudre dans la chambre de convoyage (4) à travers la vanne d'entrée de poudre (7) ouverte, alors que la vanne de sortie de poudre (8) est fermée ;
b) refermer la vanne d'entrée de poudre (7) et ouvrir la vanne de sortie de poudre (8) ;
c) injecter du gaz comprimé de transport dans la chambre de convoyage (4) pour distribuer la portion de poudre aspirée dans l'étape a) hors de la chambre de convoyage (4) à travers la vanne de sortie de poudre (8) ouverte, alors que la vanne d'entrée de poudre (7) est fermée ; et
d) refermer la vanne de sortie de poudre (8) et ouvrir la vanne d'entrée de poudre (7).

7. Procédé selon la revendication 6,
dans lequel
la valeur de la pression d'actionnement choisie pour fermer la vanne d'entrée de poudre (7) et/ou la vanne de sortie de poudre (8) est réglée en fonction de la quantité de gaz comprimé de transport injectée par unité de temps dans la chambre de convoyage (4) dans l'étape de procédé c).

8. Procédé selon l'une des revendications 1 à 7,
dans lequel
le cycle de fonctionnement suivant i) et ii) est mis en oeuvre pendant le mode de fonctionnement de rinçage :
i) refermer la vanne de sortie de poudre (8) et ouvrir la vanne d'entrée de poudre (7) ; et
ii) injecter du gaz comprimé de rinçage dans la chambre de convoyage (4) en vue de rincer la chambre de convoyage (4) et de rincer le côté aspiration de la pompe à poudre en phase dense (1) ;
et le cycle de fonctionnement suivant iii) et iv) est mis en oeuvre pendant le mode de fonctionnement de rinçage :
iii) refermer la vanne d'entrée de poudre (7) et ouvrir la vanne de sortie de poudre (8) ; et
iv) injecter du gaz comprimé de rinçage dans la chambre de convoyage (4) en vue de rincer la chambre de convoyage (4) et de rincer le côté distribution de poudre de la pompe à poudre en phase dense (1) ;
et le cycle de fonctionnement i) et ii) et le cycle de fonctionnement iii) et iv) sont mis en oeuvre de préférence de façon décalée dans le temps.

9. Procédé selon l'une des revendications 1 à 8,
dans lequel
le procédé comprend en outre les étapes suivantes :
- régler une valeur de pression d'un gaz comprimé de transport à injecter dans la chambre de convoyage (4) pendant le mode de fonctionnement de convoyage de poudre ; et/ou
- régler une quantité de gaz comprimé de transport à amener par unité de temps à la chambre de convoyage (4) pendant le mode de fonctionnement de convoyage de poudre ; et/ou
- régler la valeur de pression d'un gaz comprimé de rinçage à injecter dans la chambre de convoyage (4) pendant le mode de fonctionnement de rinçage ; et/ou
- régler une quantité de gaz comprimé de rinçage à amener par unité de temps à la chambre de convoyage (4) pendant le mode de fonctionnement de rinçage ; et/ou
- régler la valeur de la pression d'actionnement à appliquer à la vanne d'entrée de poudre (7) et/ou à la vanne de sortie de poudre (8) pendant le mode de fonctionnement de convoyage de poudre ; et/ou
- régler la valeur de la pression d'actionnement à appliquer à la vanne d'entrée de poudre (7) et/ou à la vanne de sortie de poudre (8) pendant le mode de fonctionnement de rinçage.

10. Procédé selon la revendication 9,
dans lequel
en mode de fonctionnement de convoyage de poudre, la valeur de pression du gaz comprimé de transport à injecter dans la chambre de convoyage (4) est réglée de manière à se situer dans une plage de 5 bar au maximum ;
et/ou
en mode de fonctionnement de convoyage de poudre, la quantité de gaz comprimé de transport à amener par unité de temps à la chambre de convoyage (4) est réglée à une valeur de 0,2 à 4,0 m³/h ; et/ou en mode de fonctionnement de rinçage, la valeur de pression du gaz comprimé de rinçage à injecter dans la chambre de convoyage (4) est réglée de manière à se situer dans une plage entre 4 et 10 bar ; et/ou en mode de fonctionnement de rinçage, la quantité de gaz comprimé de rinçage à amener par unité de temps à la chambre de convoyage (4) est réglée à une valeur de 5,0 à 25,0 m³/h ; et/ou
en mode de fonctionnement de convoyage de poudre, la valeur de la pression d'actionnement à appliquer à la vanne d'entrée de poudre (7) et/ou à la vanne de sortie de poudre (8) est réglée à 3 bar au maximum ;
et/ou
en mode de fonctionnement de rinçage, la valeur de la pression d'actionnement à appliquer à la vanne d'entrée de poudre (7) et/ou à la vanne de sortie de poudre (8) est réglée à 5 bar au maximum, en particulier à une plage de 2 à 5 bar ; et/ou
pour la régulation de la pression, une section transversale d'écoulement d'une conduite à gaz comprimé reliée ou susceptible d'être reliée en termes d'écoulement à la chambre de convoyage (4) est réglée localement.

11. Dispositif de convoyage de poudre (100), en particulier pour de la poudre de revêtement, le dispositif de convoyage de poudre (100) comprenant ce qui suit :
- une pompe à poudre en phase dense (1) qui comprend au moins une chambre de convoyage (4) pourvue d'une vanne d'entrée de poudre (7) et d'une vanne de sortie de poudre (8) ; et
- un moyen de commande (90) pour faire fonctionner la pompe à poudre en phase dense (1) au choix dans un mode de fonctionnement de convoyage de poudre ou dans un mode de fonctionnement de rinçage par un procédé selon l'une des revendications 1 à 10,
dans lequel
la vanne d'entrée de poudre (7) et la vanne de sortie de poudre (8) sont réalisées chacune sous la forme d'une vanne à écrasement à actionnement pneumatique qui est refermable lorsqu'une pression d'actionnement est appliquée,
il est prévu une régulation de pression (91) pourvue d'une vanne de commande (V7) et d'un capteur de pression (S1),
la vanne d'entrée de poudre (7) et/ou la vanne de sortie de poudre (8) est/sont susceptible(s) d'être reliée(s) en termes d'écoulement à une source d'air comprimé (58),
le capteur de pression (S1) détecte le niveau de pression de l'air d'actionnement pour la vanne d'entrée de poudre (7) et/ou la vanne de sortie de poudre,
dans le mode de fonctionnement de convoyage de poudre de la pompe à poudre en phase dense (1), la valeur de la pression de l'air d'actionnement est ainsi réglée par la vanne de commande (V7) à un premier niveau de pression qui suffit pour pouvoir fermer de façon étanche aux gaz, en mode de fonctionnement de convoyage de poudre, la vanne d'entrée de poudre (7) réalisée sous forme de vanne à écrasement ou la vanne de sortie de poudre (8) réalisée sous forme de vanne à écrasement, et
dans le mode de fonctionnement de rinçage de la pompe à poudre en phase dense (1), la valeur de la pression de l'air d'actionnement est ainsi réglée par la vanne de commande (V7) à un second niveau de pression qui suffit pour pouvoir fermer de façon étanche aux gaz, en mode de fonctionnement de rinçage, la vanne d'entrée de poudre (7) réalisée sous forme de vanne à écrasement ou la vanne de sortie de poudre (8) réalisée sous forme de vanne à écrasement, le second niveau de pression étant supérieur au premier niveau de pression.

12. Dispositif de convoyage de poudre (100) selon la revendication 11,
dans lequel
le dispositif de convoyage de poudre (100) comprend en outre une régulation de pression (91) pourvue d'au moins un moyen d'étranglement pour régler localement une section transversale d'écoulement d'une conduite à gaz comprimé reliée ou susceptible d'être reliée en termes d'écoulement à la chambre de convoyage (4).

13. Dispositif de convoyage de poudre (100) selon la revendication 12,
dans lequel
le moyen d'étranglement comprend au moins une vanne d'étranglement (V8), en particulier sous la forme d'une vanne de régulation, qui est réalisée pour régler une valeur de pression du gaz comprimé de transport à injecter dans la chambre de convoyage (4) pendant le mode de fonctionnement de convoyage de poudre et/ou pour régler une quantité de gaz comprimé de transport à injecter par unité de temps pendant le mode de fonctionnement de convoyage de poudre.

14. Dispositif de convoyage de poudre (100) selon la revendication 13,
dans lequel
la vanne d'étranglement (V8) est une partie de vanne stationnaire, en particulier sous la forme d'un siège de vanne, et comprend une partie de vanne (70) mobile par rapport à celui-ci et donc réglable et destinée à modifier la largeur d'ouverture d'un canal d'étranglement de ladite au moins une vanne d'étranglement (V8), la forme géométrique de la partie de vanne réglable (70) étant choisie de telle sorte que la vanne d'étranglement (V8) présente une courbe caractéristique d'écoulement ayant au moins deux zones sensiblement linéaires (A1, A2), lesdites au moins deux zones sensiblement linéaires (A1, A2) de la courbe caractéristique d'écoulement présentant des pentes différentes fixées préalablement ; et/ou
en outre un entraînement de réglage, en particulier un entraînement de réglage électrique, pilotable par le moyen de commande (90), est associé à ladite au moins une vanne d'étranglement (V8) pour régler le débit de gaz comprimé à travers la vanne d'étranglement (V8) par un déplacement de la partie de vanne mobile (70) par rapport à la partie de vanne stationnaire.

15. Dispositif de convoyage de poudre (100) selon l'une des revendications 12 à 14,
dans lequel
le moyen d'étranglement comprend un clapet d'étranglement réglable qui est pilotable par le mode de commande (90) de manière à pour être transféré dans au moins deux positions fixées ou susceptibles d'être fixées préalablement, chaque position fixée ou susceptible d'être fixée préalablement du clapet d'étranglement correspondant à un débit de gaz comprimé défini pouvant passer à travers le moyen d'étranglement.
